# EUROPEAN PATENT APPLICATION

(11) **EP 3 875 910 A1**
(43) Date of publication of application: **08.09.2021**
(21) Application number: 19879786.2
(22) Date of filing: 26.09.2019
(51) Int. Cl.: G01C 21/34, G08G 1/0969, G08G 1/14, G09B 29/00, G09B 29/10

(54) **INFORMATION PROCESSING DEVICE, INFORMATION PROCESSING METHOD, AND INFORMATION PROCESSING PROGRAM**

(30) Priority: 30.10.2018 JP 2018204169
(71) Applicant: Sony Group Corporation, Minato-ku, Tokyo 108-0075 (JP)
(72) Inventor: YAGASAKI, Yoichi, Tokyo 108-0075 (JP)
(74) Representative: Witte, Weller & Partner Patentanwälte mbB
(86) International application number: PCT/JP2019/037741
(87) International publication number: WO 2020/090306

(57) **Abstract**

An information processing device 100 according to the present disclosure includes a reception unit 133 that receives private map information including a private land area and a generation unit 134 that generates connection map information in which the private map information and public road map information are connected to each other, based on a reference point, the public road map information including information regarding a public road, and the reference point indicating a common position between the private map information received by the reception unit 133 and the public road map information.

## Description

### Field

The present disclosure relates to an information processing device, an information processing method, and an information processing program. More specifically, the present disclosure relates to generation processing of a map that can be used by a moving object or a user.

### Background

In order to realize automatic driving by an autonomous moving object such as an automobile or the like, information regarding public roads such as motorways, sidewalks or the like or map information including various meta information (pedestrian crossings, guardrails or the like) has been widely provided. Various technologies have been proposed for transmission/reception and generation of such map information.

For example, a technology capable of efficiently transmitting a map in a parking lot to an automobile having an automatic driving function has been known. In addition, a technology of generating map information dynamically corresponding to a change in an environment of the parking lot has been known.

### Citation List

### Patent Literature

Patent Literature 1: JP 2018-60393 A
Patent Literature 2: JP 2017-102015 A

### Summary

### Technical Problem

According to the related art, it is possible to appropriately transmit information of parking lots to an automobile performing automatic driving or generate parking lot information having information suitable for a current situation.

However, the related art only provides a user with information regarding some areas away from public roads, such as the parking lots. That is, in the related art, it is not always possible to provide the user with map information corresponding to a situation in which the user goes across a plurality of areas in which traffic rules or driving rules are different from each other, such as a case where the user intends to invade private land from the public road.

Therefore, the present disclosure proposes an information processing device, an information processing method, and an information processing program capable of providing a user with map information for enabling flexible driving control.

### Solution to Problem

To solve the problem described above, an information processing device includes: a reception unit that receives private map information including a private land area; and a generation unit that generates connection map information in which the private map information and public road map information are connected to each other, based on a reference point, the public road map information including information regarding a public road, and the reference point indicating a common position between the private map information received by the reception unit and the public road map information.

### Advantageous Effects of Invention

According to the information processing device, the information processing method, and the information processing program according to the present disclosure, it is possible to provide a user with map information for enabling flexible operation control. Note that an effect described here is not necessarily limited, and may be any effect described in the present disclosure.

### Brief Description of Drawings

FIG. 1 is a diagram illustrating an outline of information processing according to a first embodiment of the present disclosure.
FIG. 2 is a diagram illustrating a configuration example of an information processing system according to the first embodiment of the present disclosure.
FIG. 3 is a sequence diagram illustrating a flow of processing according to the first embodiment of the present disclosure.
FIG. 4 is a first flowchart illustrating a flow of processing according to the first embodiment of the present disclosure.
FIG. 5 is a second flowchart illustrating a flow of processing according to the first embodiment of the present disclosure.
FIG. 6 is a diagram for describing a procedure of connection processing according to the first embodiment of the present disclosure.
FIG. 7 is a first plan view for describing connection processing according to the first embodiment of the present disclosure.
FIG. 8 is a second plan view for describing connection processing according to the first embodiment of the present disclosure.
FIG. 9 is a third plan view for describing connection processing according to the first embodiment of the present disclosure.
FIG. 10 is a fourth plan view for describing connection processing according to the first embodiment of the present disclosure.
FIG. 11 is a flowchart illustrating a flow of processing according to a modification of the first embodiment.
FIG. 12 is a diagram for describing a procedure of connection processing according to a modification of the first embodiment.
FIG. 13 is a first plan view for describing connection processing according to a modification of the first embodiment.
FIG. 14 is a second plan view for describing connection processing according to a modification of the first embodiment.
FIG. 15 is a third plan view for describing connection processing according to a modification of the first embodiment.
FIG. 16 is a fourth plan view for describing connection processing according to a modification of the first embodiment.
FIG. 17 is a fifth plan view for describing connection processing according to a modification of the first embodiment.
FIG. 18 is a diagram illustrating a configuration example of an information processing system according to a second embodiment of the present disclosure.
FIG. 19 is a sequence diagram illustrating a flow of processing according to the second embodiment of the present disclosure.
FIG. 20 is a diagram illustrating a configuration example of an information processing system according to a third embodiment of the present disclosure.
FIG. 21 is a sequence diagram illustrating a flow of processing according to the third embodiment of the present disclosure.
FIG. 22 is a hardware configuration diagram illustrating an example of a computer that realizes a function of an information processing device.

### Description of Embodiments

Hereinafter, embodiments of the present disclosure will be described in detail with reference to the drawings. Note that in each of the following embodiments, the same portions will be denoted by the same reference numerals and an overlapping description thereof will be omitted.

### (1. First embodiment)

### [1-1. Outline of information processing according to first embodiment]

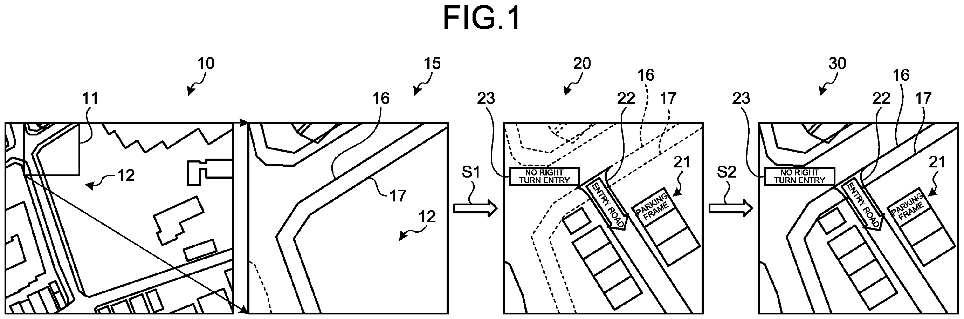

FIG. 1 is a diagram illustrating an outline of information processing according to a first embodiment of the present disclosure. The information processing according to the first embodiment of the present disclosure includes, for example, processing for generating map information for a moving object (for example, an automobile) performing automatic driving to use for control of the automatic driving, or the like.

In general, an automobile performing automatic driving uses high-precision road map information (referred to as "dynamic map" or the like) including information regarding public roads (publicly maintained motorways, sidewalks or the like). The high-precision road map information is, for example, a high-precision map (map in which image data of an actually existing public road, a shoulder edge of the public road, an intersection point area, a roadway link, a lane link, and the like, are associated with each other) capable of specifying a relative position of 25 cm from a certain reference point (position that can serve as a predetermined reference, such as the center of a public road, the center of an intersection point, or the like). Further, in addition to the map, various dynamic information (vehicles or persons on the public road, signals, traffic jam information, traffic regulation information, and the like) is superimposed on the high-precision road map information. Hereinafter, in the present disclosure, the map information including the information regarding the public road as described above will be referred to as "public road map information". In the present disclosure, it is assumed that the public road map information is information that can be freely used by general users who use automobiles.

Public road map information 10 illustrated in FIG. 1 shows an example of public road map information. As illustrated in FIG. 1, the public road map information includes a boundary line between a roadway and a sidewalk, a position of a building, or the like. However, since information does not exist (or is not open to general users) for an area that is not open to the public, for example, private land or the like, in a public road map, the area is displayed as a blank. It is assumed that an area 12 in the public road map information 10 illustrated in FIG. 1 is private land and detailed information in the area is unknown.

Here, an enlarged display of an area 11 in the public road map information 10 is illustrated in public road map information 15. In the public road map information 15, a roadway boundary line 16 indicates a boundary line between a roadway and a sidewalk in the public road. The automobile can perform automatic driving so as not to enter a sidewalk area by referring to a position of the roadway boundary line 16. In addition, in the public road map information 15, a sidewalk boundary line 17 indicates a boundary line between the sidewalk and the area 12, which is private land, in the public road.

Here, the area 12 is, for example, a parking lot of a commercial facility. In an example of FIG. 1, it is assumed that a driver (hereinafter referred to as a "user") of the automobile desires to park the automobile in the parking lot existing in the area 12. However, since the public road map information 15 does not include information in the area 12 (a speed limit in the area, a road on which the automobile can travel in the area, a route for the automobile to enter the area 12, or the like), it is difficult for the automobile to continue the automatic driving.

By the way, it is assumed that a facility managing the area 12 has map information including various information in the area 12, which is private land. Hereinafter, in the present disclosure, the map information including the information regarding the private land area as described above will be referred to as "private map information". In the present disclosure, it is assumed that the private map information is not information that can be freely acquired, but information whose provision is managed by, for example, a manager of the private land, or the like.

Private map information 20 illustrated in FIG. 1 shows a private map corresponding to the area 12. As illustrated in FIG. 1, the private map information 20 includes information regarding various sections (for example, parking frames 21 indicating parking lot sections or road sections) existing in the area 12. In addition, the private map information 20 includes meta information such as route information 22 for the automobile to enter the private land from the public road or exit from the private land, a traffic rule 23, which is a private traffic rule (traffic rule determined by a parking lot manager or the like rather than the Road Traffic Act) when the automobile enters the private land, or the like. Note that the private map information 20 may have information such as a sidewalk boundary line 17, which is a boundary with the public road, a roadway boundary line 16 which intersects with a route for the automobile to enter the private land from the public road, or the like.

It is assumed that the private map information 20 is provided from the facility to the automobile in response to, for example, a request from a user who intends to use the facility. The automobile acquires the private map information 20 by receiving the private map information 20 provided from the facility (Step S1). Note that in the example of FIG. 1, it is assumed that the private map information 20 is information created in a format conforming to the public road map.

However, even though the automobile receives the private map information 20, it is difficult for the automobile to continue the automatic driving into the area 12 only with the private map information. For example, the public road map information 15 includes position information of the roadway and the sidewalk, which are the public road, or information (positions of a pedestrian crossing, a guardrail or the like) associated with the position information, but does not include a route for the automobile to enter an inside of the sidewalk, a traffic rule that enables the automobile to enter the sidewalk, or the like. For this reason, the automobile cannot enter the area 12 and cannot continue the automatic driving according to the control by the automatic driving.

Therefore, in the information processing according to the first embodiment of the present disclosure, after the private map information 20, which is the private map information, is received, connection map information 30 in which the private map information and the public road map information are connected to each other is generated based on a reference point indicating a common position between the private map information 20 and the public road map information 15, which is the public road map information.

Although details will be described later, in the information processing according to the present disclosure, one or a plurality of reference points (positions) are specified based on a positional relationship with the public road in each of the public road map information 15 and the private map information 20, and the public road map information 15 and the private map information 20 are superimposed based on the specified points. Therefore, the automobile acquires the connection map information 30 in which the public road map information 15 and the private map information 20 are connected to each other (superimposed) (Step S2).

As illustrated in FIG. 1, the connection map information 30 includes various information such as the parking frame 21, the route information 22, the traffic rule 23, or the like, included in the private map information 20, which is the private map information, in addition to the roadway boundary line 16 or the sidewalk boundary line 17 included in the public road map information 15, which is the public road map information. Therefore, the automobile can travel across the roadway boundary line 16 or the sidewalk boundary line 17, which was not possible only with the public road map information 15, and it thus becomes possible for the automobile to enter the area 12 from the public road or exit from the area 12. That is, according to the information processing according to the present disclosure, it is possible to provide the user with the connection map information 30 for enabling flexible driving control.

Hereinafter, a system and a device for executing the above information processing will be described in detail with reference to the drawings.

### [1-2. Configuration of information processing system according to first embodiment]

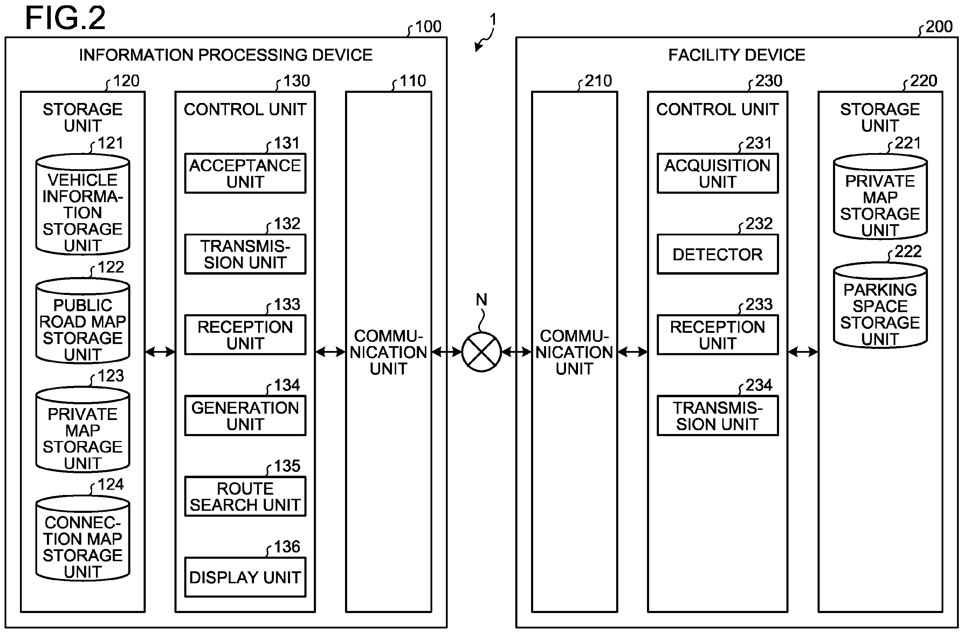

A configuration of an information processing system 1 including an information processing device 100, which is an example of an information processing device executing the information processing according to the first embodiment, a facility device 200 that provides a private map will be described with reference to FIG. 2. FIG. 2 is a diagram illustrating a configuration example of the information processing system 1 according to the first embodiment of the present disclosure.

The information processing device 100 is an example of the information processing device according to the present disclosure. The information processing device 100 is, for example, an information processing terminal mounted on a moving object (automobile or the like) performing automatic driving. Note that the information processing device 100 may be a smartphone, a tablet terminal or the like carried by the user.

The facility device 200 is an information processing device used by a manager who manages private land, and is, for example, a server device for managing a parking lot.

First, a configuration of the information processing device 100 will be described. As illustrated in FIG. 2, the information processing device 100 includes a communication unit 110, a storage unit 120, and a control unit 130. Note that the information processing device 100 may include an input unit (for example, a keyboard, a mouse or the like) that accepts various operations from a user or the like who uses the information processing device 100 or a display unit (for example, a liquid crystal display or the like) for displaying various information.

The communication unit 110 is realized by, for example, a network interface card (NIC) or the like. The communication unit 110 is connected to a network N (Internet or the like) in a wired or wireless manner, and transmits and receives information to and from the facility device 200 or the like via the network N.

The storage unit 120 is realized by, for example, a semiconductor memory element such as a random access memory (RAM), a flash memory, or the like, or a storage device such as a hard disk, an optical disk or the like. The storage unit 120 includes a vehicle information storage unit 121, a public road map storage unit 122, a private map storage unit 123, and a connection map storage unit 124.

The vehicle information storage unit 121 stores information regarding a vehicle controlled manually by the user or by automatic driving by the information processing device 100. For example, the vehicle information storage unit 121 stores information such as a size and a weight of a vehicle body, a vehicle type, and the like. In addition, the vehicle information storage unit 121 may store information regarding the user who handles the vehicle. For example, the vehicle information storage unit 121 stores attribute information (a gender, an age, a place of residence, a driving history, and the like) of the user. Note that in a case where there is a parking history by the user in the parking lot, the vehicle information storage unit 121 may store an amount of money that the user has paid to the parking lot in the past, information indicating whether or not the user is a good customer, or the like.

The public road map storage unit 122 stores public road map information. For example, the information processing device 100 acquires public road map information from a public institution that manages roads, a business operator that provides a public road map, or the like, and stores the acquired information in the public road map storage unit 122.

The private map storage unit 123 stores private map information. For example, the information processing device 100 acquires private map information from the facility device 200 used by the manager who manages the private land, and stores the acquired information in the private map storage unit 123.

The connection map storage unit 124 stores connection map information generated by connecting the public road map information and the private map information to each other.

The control unit 130 is realized by executing a program (for example, an information processing program according to the present disclosure) stored in the information processing device 100 using a random access memory (RAM) or the like as a work area by, for example, a central processing unit (CPU), a micro processing unit (MPU) or the like. In addition, the control unit 130 is a controller, and may be realized by an integrated circuit such as an application specific integrated circuit (ASIC), a field programmable gate array (FPGA) or the like.

As illustrated in FIG. 2, the control unit 130 includes an acceptance unit 131, a transmission unit 132, a reception unit 133, a generation unit 134, a route search unit 135, and a display unit 136, and realizes or executes functions or actions of information processing to be described below. Note that an internal configuration of the control unit 130 is not limited to a configuration illustrated in FIG. 2, and may be another configuration as long as it is a configuration for performing information processing to be described later.

The acceptance unit 131 accepts various information. For example, the acceptance unit 131 accepts an input or the like of information regarding an own device (vehicle) or information regarding the user. The acceptance unit 131 stores the accepted information in the vehicle information storage unit 121.

In addition, the acceptance unit 131 accepts a user's intention (request) such as entering a private land area, or the like. Specifically, the acceptance unit 131 accepts an intention (request) to park the vehicle in a predetermined parking lot from the user. In a case where the acceptance unit 131 accepts such a request, the acceptance unit 131 sends vehicle information and information regarding the user's request to the transmission unit 132.

The transmission unit 132 transmits various information. For example, the transmission unit 132 transmits an entry request into the private land area. Specifically, the transmission unit 132 transmits a request indicating the intention to park the vehicle in the predetermined parking lot, which is the request from the user, to the facility device 200. In other words, the transmission unit 132 transmits a transmission request for a private map including private land information such as a parking lot or the like to the facility device 200. Therefore, the information processing device 100 can acquire the private map for generating a connection map that enables entry into an area that is difficult to enter only with the public road map in automatic driving.

Note that the transmission unit 132 may transmit attribute information of the user requesting the entry into the private land or information regarding the moving object entering to the private land, together with the entry request into the private land. Specifically, the transmission unit 132 transmits a size or a weight of the vehicle, a vehicle type, the attribute information of the user, or the like. Therefore, the facility device 200 can designate an empty space in the parking lot according to the vehicle of the user and can designate an entry route suitable for the vehicle type of the user, in the private map to be transmitted to the information processing device 100.

The reception unit 133 receives various information. For example, the reception unit 133 receives private map information including the private land area from the facility device 200 that has responded to the request transmitted by the transmission unit 132.

As described above, the private map information includes various meta information together with a coordinate, an image (so-called map information) or the like indicating the private land area. For example, the reception unit 133 receives private map information including information regarding a route for the vehicle to enter the private land area or exit from the private land area or a traffic rule in the private land area. Specifically, the reception unit 133 receives a private map including meta information such as the route information 22, the traffic rule 23 illustrating the traffic rule in the private land, or the like, illustrated in FIG. 1. Note that an example in which the route information 22, the traffic rule 23 or the like is conceptually displayed in private map information 20 and the connection map information 30 has been illustrated in FIG. 1, but the route information 22 or the traffic rule 23 does not necessarily need to be displayed in the map information. That is, the route information 22, the traffic rule 23 or the like is internal information included in the private map, and may be information that cannot be viewed by the user.

In addition, the reception unit 133 may receive private map information including information indicating an area where the moving object can be parked in the private land area. For example, the reception unit 133 receives a private map including information indicating an area where the moving object such as the automobile or the like can be parked, such as the parking frame 21 or the like illustrated in FIG. 1. In addition, the reception unit 133 may receive meta information designating what size or type of vehicle can be parked in which parking frame, together with the information indicating the area where the moving object can be parked. Therefore, the information processing device 100 can park the automobile according to an intention of the manager in a case where the automobile is parked by the automatic driving.

In addition, the reception unit 133 may receive a format of the private map information or information indicating whether or not the private map information has received predetermined authentication. As described above, since the private map information is arbitrarily generated by the manager or the like of the private land, there can also be a possibility that the format of the private map information will not conform to the public road map information. For this reason, the reception unit 133 receives the format of the private map information so that a generation unit 134 to be described later can perform generation processing according to the format of the private map information.

In addition, it is assumed that the private map information is private map information that has been generated in a predetermined unified format in spite of the format that does not conform to the public road map information and has been authenticated by a reliable third party organization or the like. In this case, there is a possibility that the information processing device 100 can perform the generation processing in a format or the like proposed by the organization that has performed the authentication by determining a type of authentication, or the like. For this reason, the reception unit 133 may receive information indicating whether the private map information has received predetermined authentication so that a generation unit 134 to be described later can efficiently perform generation processing of connection map information.

The meaning that the reception unit 133 has received information indicating that the format of the private map information conforms to the public road map information is that the reception unit 133 has received the private map information conforming to the format of the public road map information. In this case, a generation unit 134 to be described later can relatively easily generate connection map information.

For example, the reception unit 133 receives private map information including information indicating a positional relationship with the public road as the private map information conforming to the format of the public road map information. For example, the reception unit 133 receives private map information or the like in which a distance from a center line of the public road to a predetermined point is included, a distance from an intersection point to a predetermined point is included, or a boundary line between the public road and the private land is clearly defined.

In addition, the reception unit 133 may receive private map information including position information indicating a position of a reference point in the private map information. The reference point is any one or a plurality of points (coordinates) of the private map information, and is one of connection information used for connection with the public road map information. Note that the reference point may be a point having some feature, such as a point on a boundary line with the public road, a point indicating an entry point from the public road to the private land, or the like.

In addition, the reception unit 133 may receive private map information including information indicating a boundary between the private land area and the public road. Specifically, the reception unit 133 receives private map information including information regarding a boundary line where the private land area borders on the public road. Normally, since the public road map information also includes information regarding the boundary line where the public road borders on the private land area, if the reception unit 133 receives the private map information including the information indicating the boundary between the private land area and the public road, generation processing to be described later can be efficiently performed.

Note that in a case where the private map information does not conform to the format of the public road map information, the reception unit 133 may receive, for example, private map information including position information indicating a position of a reference point, which is a point registered in advance in the private map information. That is, the reception unit 133 receives private map information including position information (for example, latitude, longitude, altitude, or the like) of the reference point set in advance by the manager or the like of the private land as meta information. Therefore, the information processing device 100 can specify the reference point, which is a point indicating a common position between the private map information and the public road map information, based on the position information, even though the private map information does not conform to the format of public road map information.

The generation unit 134 generates connection map information in which the private map information and the public road map information are connected to each other, based on the reference point indicating the common position between the private map information received by the reception unit 133 and the public road map information including the information regarding the public road. That is, the generation unit 134 specifies the reference point indicating the common position between the private map information and the public road map information, and superimposes maps of the private map information and the public road map information at the reference point to generate the connection map information. Note that the reference point may be one point (one coordinate), may be a plurality of points, or may be information (for example, a boundary line) in which points are accumulated.

For example, the generation unit 134 generates connection map information in which the information regarding the route for the vehicle to enter the private land area or exit from the private land area or the traffic rule in the private land area is reflected. Therefore, the information processing device 100 can safely control the automatic driving not only on the public road but also on the private land such as the parking lot or the like.

In addition, in a case where a traffic rule included in the public road map information and a traffic rule included in the private map information are different from each other in a predetermined area, the generation unit 134 may generate connection map information to which the traffic rule included in the private map information is preferentially applied.

For example, in a case where the connection map information is generated by the generation unit 134, two traffic rules of the public road map information and the private map information may be included in a sidewalk, which is the public road. At this time, the private map information has a traffic rule for entering the private land across the sidewalk, while the public road map information has a traffic rule for prohibiting entry into the sidewalk in principle. For this reason, if the traffic rule of the public road map information is prioritized, the automobile may not be able to enter the private land by the automatic driving.

For this reason, in a case where the traffic rule included in the public road map information and the traffic rule included in the private map information are different from each other, the generation unit 134 may prevent the automatic driving from being hindered by generating connection map information to which the traffic rule included in the private map information is preferentially applied.

In addition, the generation unit 134 may generate connection map information including the information indicating the area where the moving object can be parked in the private land area. Specifically, the generation unit 134 generates connection map information including information of parking frames or the like partitioned by white lines or the like or information of the parking lot that reflects a current parking situation in real time. Therefore, the information processing device 100 can control the automatic driving by determining section information of parking information that is not included in the public road map information or a parking area where parking is permitted for the own device, and can thus improve safety and allow driving to be smoothly performed.

The generation unit 134 generates the connection map information based on the format of the private map information or the information indicating whether or not the private map information has received the predetermined authentication. For example, in a case where the format of the private map information conforms to the format of the public road map information or in a case where the private map information has received the predetermined authentication, the generation unit 134 generates the connection map information according to a manner of conforming to the format of the public road map information, a manner proposed by an organization performing the authentication, or the like. In addition, for example, in a case where the format of the private map information does not conform to the format of the public road map information or in a case where the private map information has not received the predetermined authentication, the generation unit 134 generates the connection map information by processing such as correcting a deviation between reference points on maps of the private map information and the public road map information, or the like, as described later.

For example, in a case where the private map information conforms to the format of the public road map information, the generation unit 134 generates the connection map information by changing scale information and azimuth information of the private map information so as to be matched to those of the public road map information. This is because the scale information and the azimuth information set in the private map information are in the same format as the public road map information, and scale information and azimuth information of the maps of the private map information and the public road map information can thus be easily unified.

Further, the generation unit 134 specifies reference points in the private map information and the public road map information based on information indicating a positional relationship with the public road after matching the scale information and the azimuth information, and generates the connection map information based on the specified reference points. For example, the generation unit 134 specifies a point (for example, a point having distance information from the center line of the public road) having information regarding the positional relationship with the public road, which is a point included in the private map information, and a point in the public road map information corresponding to the same position as the point as the reference points, which are common points between the private map information and the public road map information. Then, the generation unit 134 connects the private map information and the public road map information to each other by superimposing the reference points to generate the connection map information.

In addition, in a case where the generation unit 134 acquires position information indicating a position of the reference point in the private map information by another method, the generation unit 134 may specify a position in the public road map information indicated by the position information and a reference point in the private map information as the reference points. That is, the generation unit 134 specifies the reference points based on absolute position information (for example, longitude, latitude, altitude, or the like) of the reference point, rather than the positional relationship with the public road. For example, the generation unit 134 acquires the absolute position information of the reference point in the private map information. In addition, the generation unit 134 specifies a point having the same position information as the absolute position information of the reference point in the private map information, in the public road map information. Then, the generation unit 134 generates the connection map information by superimposing the private map information and the public road map information so that both points are at the same position.

In addition, in a case where the private map information including the information indicating the boundary between the private land area and the public road is received, the generation unit 134 may generate the connection map information based on a comparison between the information indicating the boundary, included in the private map information and information indicating a boundary with the private land area in the public road map information. For example, the generation unit 134 matches the scale information and the azimuth information of the private map information and the public road map information, and then acquires information of a boundary line between the public road and the private land in the maps of the private map information and the public road map information. Then, the generation unit 134 generates the connection map information so that, for example, a distance by which a sidewalk boundary line (a boundary line between the sidewalk and the private land) in the public road map information and a private land boundary line (a boundary line between the sidewalk and the private land, corresponding to the sidewalk boundary line in public road map information) in the private map information deviate from each other becomes minimum. For example, the generation unit 134 generates the connection map information by assuming that respective boundary lines are two line segments and shifting the map information (correcting a position) to a position where a deviation between the two line segments (distance between the line segments) becomes minimum.

In addition, in a case where the private map information having the reference point registered in advance is received, the generation unit 134 may specify a position in the public road map information indicated by position information of the reference point, and generate the connection map information by superimposing the reference points with the specified position in the public road map information and a reference point as the reference points. In this case, the reference point is registered in advance in the private map information by the manager or the like of the private map information together with the absolute position information as the meta information of the private map information. The generation unit 134 specifies a point having the same position information as the absolute position information of the reference point in the private map information, in the public road map information. Then, the generation unit 134 generates the connection map information by superimposing the private map information and the public road map information so that both points are at the same position. As such, in a case where the reference point having the position information registered in advance is registered as the meta information, the information processing device 100 can efficiently connect the private map information and the public road map information to each other.

In addition, the generation unit 134 may generate the connection map information by combining the various methods described above with each other if necessary. For example, the generation unit 134 can make a connection with higher accuracy by combining the various methods with each other.

In addition, the generation unit 134 generates the connection map information by a different method in a case where the format of the private map information does not conform to the format of the public road map information or in a case where the private map information has not received the predetermined authentication. Such generation processing will be described later as a modification of the first embodiment.

The route search unit 135 searches for a route through which the vehicle passes based on the map information accepted by the acceptance unit 131 or received by the reception unit 133.

For example, the route search unit 135 searches for a route for the vehicle to enter the private land area or exit from the private land area, based on the connection map information generated by the generation unit 134. According to the route search unit 135, it is possible to search for a route for entry into the sidewalk where the automatic driving is normally difficult or the private land. In addition, the route search unit 135 can provide useful information such as a route up to the parking frame in the private land, or the like, to the user who performs manual driving as well as at the time of automatic driving.

In addition, the route search unit 135 may control the movement of the moving object based on the searched route. That is, the route search unit 135 controls the automatic driving for the moving object such as the vehicle or the like according to the searched route simultaneously with presenting the searched route to the user. Therefore, the user can realize automatic driving with high safety not only on the public road but also on the private land.

The display unit 136 displays the connection map information generated by the generation unit 134 or the route searched by the route search unit 135. For example, the display unit 136 controls processing for displaying the connection map information or the route on a display included in the information processing device 100, an external display, or the like.

Next, a configuration of the facility device 200 will be described. As illustrated in FIG. 2, the facility device 200 includes a communication unit 210, a storage unit 220, and a control unit 230. Note that the facility device 200 may include an input unit (for example, a keyboard, a mouse or the like) that accepts various operations from a user or the like who uses the facility device 200 or a display unit (for example, a liquid crystal display or the like) for displaying various information.

The communication unit 210 is realized by, for example, a NIC or the like. The communication unit 210 is connected to a network N in a wired or wireless manner, and transmits and receives information to and from the information processing device 100 or the like via the network N.

The storage unit 220 is realized by, for example, a semiconductor memory element such as a RAM, a flash memory, or the like, or a storage device such as a hard disk, an optical disk or the like. The storage unit 220 includes a private map storage unit 221 and a parking space storage unit 222.

The private map storage unit 221 stores private map information. For example, the private map storage unit 221 stores private map information created by the manager who manages the private land. The private map information may include various meta information such as section information in the private land, a traffic rule, an entry place or an entry route from the public road to the private land, and absolute position information indicating the private land, or the like, as meta information.

The parking space storage unit 222 stores information regarding a parking space on the private land. The stored information regarding the parking space includes position information indicating parking frames where the vehicle can be parked among sections of the private land, sizes and weights of vehicles that can be parked for each parking frame, a use fee or a use time of the parking space, a real-time situation in which vehicles have been already parked in the parking frames, or the like. Note that an example in which the information regarding the parking space is stored in the parking space storage unit 222 has been illustrated in FIG. 2, but the information regarding the parking space may be meta information superimposed on the private map information.

The control unit 230 is realized by, for example, executing a program or the like stored in the facility device 200 as a work area by a CPU, an MPU or the like. In addition, the control unit 130 is a controller, and may be realized by an integrated circuit such as an ASIC, an FPGA or the like.

As illustrated in FIG. 2, the control unit 230 includes an acquisition unit 231, a detector 232, a reception unit 233, and a transmission unit 234, and realizes or executes functions or actions of information processing to be described below. Note that an internal configuration of the control unit 230 is not limited to a configuration illustrated in FIG. 2, and may be another configuration as long as it is a configuration for performing information processing to be described later.

The acquisition unit 231 acquires various information. For example, the acquisition unit 231 acquires private map information created by a manager of the facility device 200. Note that the acquisition unit 231 may acquire private map information corresponding to a transmission request for a private map from an external device or the like (for example, a server that intensively manages private map information, or the like) with the reception of the transmission request by a reception unit 233 to be described later as a trigger. The acquisition unit 231 stores the acquired private map information in the private map storage unit 221.

The detector 232 detects information regarding the private land. For example, the detector 232 detects vehicles existing around the private land using various sensors. In addition, the detector 232 detects, in real time, information such as whether or not a vehicle is parked in the parking space or information regarding a vehicle passing through the inside of the private land.

The reception unit 233 receives various information. For example, the reception unit 233 receives a transmission request for private map information from the user (information processing device 100) who desires to use the private land. In addition, the reception unit 233 receives information regarding the vehicle that intends to use the private land or information regarding the user from the information processing device 100 that has transmitted the request.

The transmission unit 234 transmits various information. For example, the transmission unit 234 transmits the private map information to the information processing device 100 according to the transmission request received by the reception unit 233. At this time, the transmission unit 234 may refer to the parking space storage unit 222 and transmit information such as whether or not there is an empty space in a parking lot that the user intends to use, a use fee of the parking lot, or the like, before transmitting the private map information.

### [1-3. Procedure of information processing according to first embodiment]

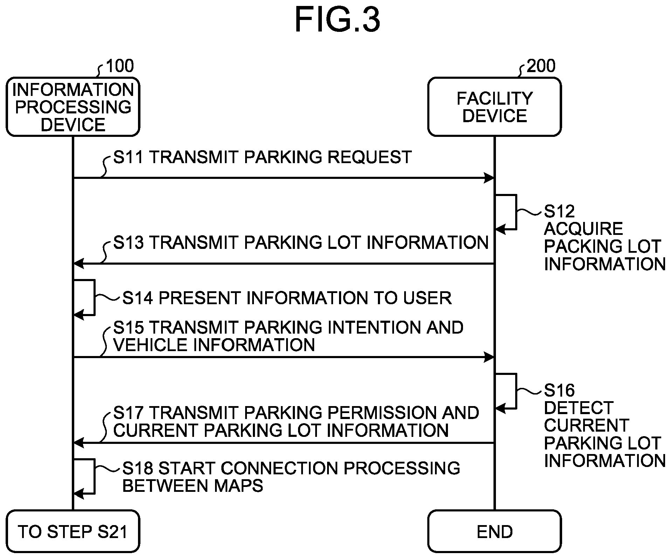

Next, a procedure of information processing according to the first embodiment will be described with reference to FIGS. 3 to 6. FIG. 3 is a sequence diagram illustrating a flow of processing according to the first embodiment of the present disclosure. Note that in FIGS. 3 to 6, a situation in which a user who uses the information processing device 100 transmits a parking request to a parking lot managed by the facility device 200 during automatic driving will be described as an example.

As illustrated in FIG. 3, the information processing device 100 transmits a parking request to the facility device 200 (Step S11). Note that the parking request may be transmitted with a user's operation as a trigger or may be automatically transmitted with arrival of the information processing device 100 at the vicinity of the parking lot as a trigger. For example, the information processing device 100 may automatically transmit the parking request when it has detected a radio wave such as a beacon or the like provided in the facility device 200 (or the parking lot).

The facility device 200 acquires parking lot information (private map information corresponding to the parking lot) corresponding to the parking request (Step S12). Then, the facility device 200 transmits the acquired parking lot information to the information processing device 100 (Step S13).

The information processing device 100 presents the received parking lot information to the user (Step S14). For example, the information processing device 100 presents a distance to the parking lot, a parking fee, information regarding a parking space, or the like, to the user.

Thereafter, if the information processing device 100 accepts a user's parking intention to park an own vehicle in the parking lot, the information processing device 100 transmits the parking intention and vehicle information of the own device to the facility device 200 (Step S15). Note that the information processing device 100 may transmit an expected parking time, information indicating that the user is a user who has used the parking lot in the past, or the like, together with the parking intention.

The facility device 200 that has received the user's parking intention detects current parking lot information (Step S16). For example, the facility device 200 detects whether or not a parking frame suitable for the vehicle on which the user rides is empty, a route such as to which parking frame it is appropriate to guide the user, or the like.

Then, the facility device 200 determines a position of the parking frame suitable for the vehicle on which the user rides, information designating the parking frame in which the user is to park the vehicle, or the like, and then transmits a parking permission indicating that the parking is permitted and the current parking lot information (Step S17). Note that the current parking lot information may be transmitted as meta information superimposed on the private map information corresponding to the parking lot.

If the information processing device 100 receives the parking lot information from the facility device 200, the information processing device 100 starts processing for connecting the received parking lot information and the public road map information to each other (Step S18).

Note that in a case where the user has not shown the parking intention in Step S14 or in a case where an available parking space has not been detected in Step S16, the processing may end.

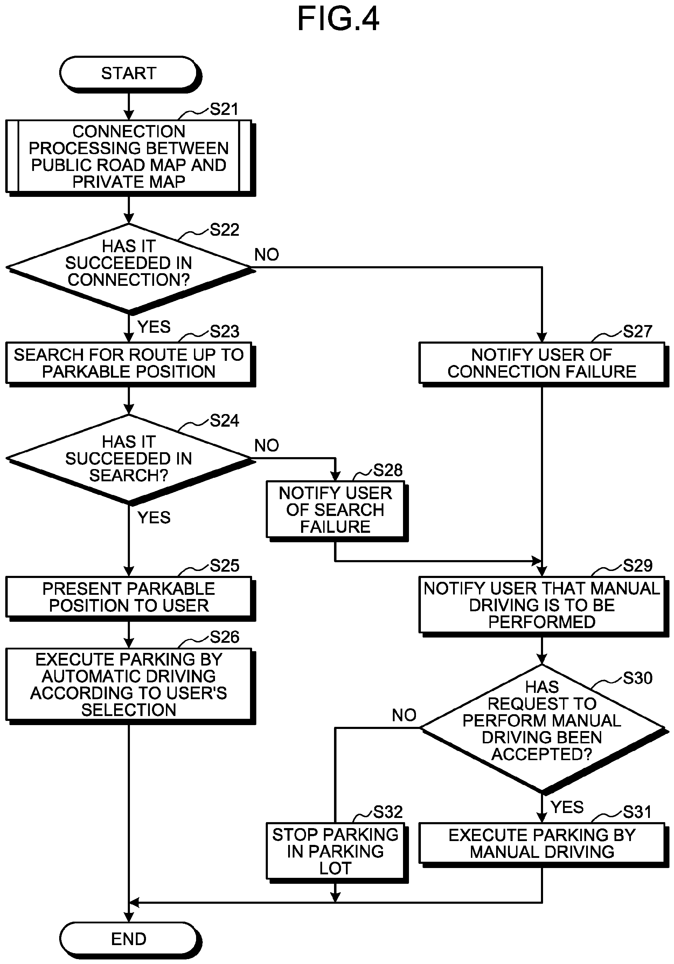

Next, a flow of processing regarding use of the connection map information will be described with reference to FIG. 4. FIG. 4 is a first flowchart illustrating a flow of processing according to the first embodiment of the present disclosure.

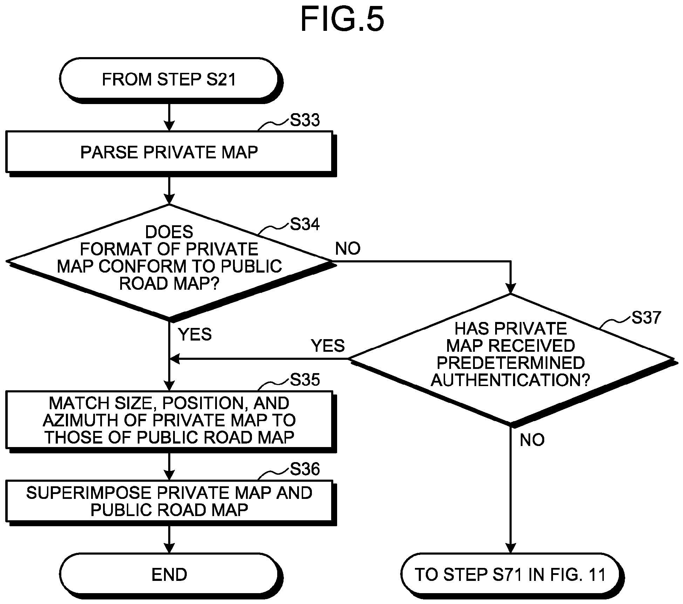

As illustrated in FIG. 4, first, the information processing device 100 executes connection processing between the public road map information and the private map information (Step S21). Details of such processing will be described later with reference to FIG. 5.

Here, the information processing device 100 determines whether or not it has succeeded in connection between the map information (Step S22). In a case where it has succeeded in the connection (Step S22: Yes), the information processing device 100 searches for a route up to a parkable position based on the connection map information (Step S23).

Here, the information processing device 100 determines whether or not it has succeeded in the search for the route (Step S24). In a case where it has succeeded the search (Step S24: Yes), the information processing device 100 presents the parkable position to the user using a display, a voice or the like (Step S25). Then, the information processing device 100 executes parking by automatic driving according to, for example, an instruction of the user who has selected one parkable position (Step S26) .

Note that in a case where it has failed in the connection between the map information (Step S22: No), the information processing device 100 notifies the user of connection failure (Step S27). In this case, it is difficult to continue the automatic driving, and the information processing device 100 thus notifies the user that manual driving is to be performed (Step S29).

Note that it has failed in the search for the route in the connection map information (Step S24: No), the information processing device 100 notifies the user that it has failed in the search for the route (Step S28). Then, the information processing device 100 notifies the user that the manual driving is to be performed (Step S29) because it is difficult to continue the automatic driving as in Step S27.

Thereafter, the information processing device 100 determines whether or not a request to perform the manual driving has been accepted from the user (Step S30). In other words, the information processing device 100 determines whether or not the user has agreed to perform the manual driving for entry into the parking lot or parking in the parking lot.

In a case where the request to perform the manual driving has been accepted from the user (Step S30: Yes), the information processing device 100 executes parking by the manual driving by the user instead of the automatic driving (Step S31). On the other hand, in a case where the request to perform the manual driving has not been accepted from the user (Step S30: No), the information processing device 100 stops the parking in the parking lot (Step S32).

Next, a flow of connection processing between map information will be described with reference to FIG. 5. FIG. 5 is a second flowchart illustrating a flow of processing according to the first embodiment of the present disclosure.

First, the information processing device 100 parses the received private map information (Step S33). Then, the information processing device 100 determines whether or not the format of the private map information conforms to the public road map information (Step S34).

In a case where the format of the private map information conforms to the public road map information (Step S34: Yes), the information processing device 100 can apply the meta information of the private map information to the public road map information as it is. First, the information processing device 100 matches a size, a position, and an azimuth of the private map information to those of the public road map information (Step S35). Then, the information processing device 100 superimposes the private map information and the public road map information (Step S36) .

On the other hand, in a case where the format of the private map information does not conform to the public road map information (Step S34: No), the information processing device 100 determines whether or not the private map information has received the predetermined authentication (Step S37).

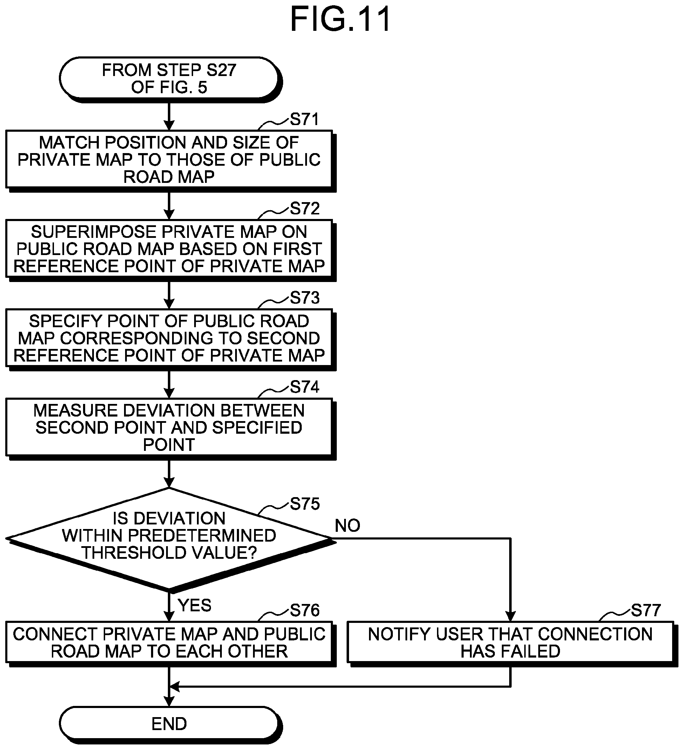

In a case where the private map information has received the predetermined authentication (Step S37: Yes), the information processing device 100 can use the meta information of the private map information based on a method proposed by an organization that performs the predetermined authentication. For this reason, the information processing device 100 can connect the private map information and the public road map information to each other in processing similar to that in a case where the format of the private map information conforms to the public road map information. On the other hand, in a case where the private map information has not received the predetermined authentication (Step S37: No), the information processing device 100 connects the private map information and the public road map information to each other by another method. Such processing will be described later with reference to FIG. 11.

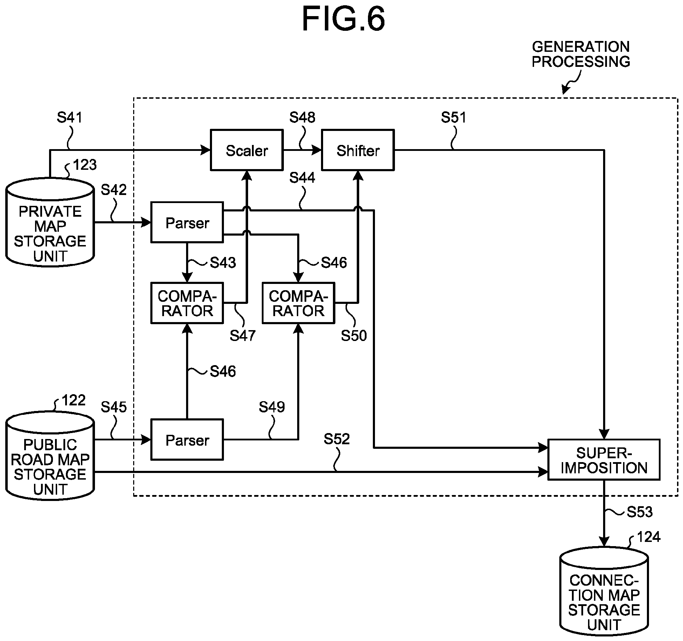

Next, a procedure of generation processing of connection map information will be described with reference to a conceptual block diagram of FIG. 6. FIG. 6 is a diagram for describing a procedure of connection processing according to the first embodiment of the present disclosure.

First, the information processing device 100 refers to the private map storage unit 123 to acquire specific topographical data (hereinafter, referred to as "map data") indicated by a coordinate or the like (Step S41). In addition, the information processing device 100 refers to the private map storage unit 123 to acquire meta information including an azimuth or a size, position information, and the like, of the map (Step S42). The information processing device 100 sends information regarding the size or the azimuth of the private map information to a comparator via a parser (Step S43). In addition, the information processing device 100 sends meta information such as a format parsed by the parser, information regarding the predetermined authentication, or the like, to a superimposition processing unit (Step S44). In addition, the information processing device 100 sends the position information (longitude, latitude or the like) included in the private map information to the comparator via the parser (Step S46).

In addition, the information processing device 100 refers to the public road map storage unit 122 to acquire meta information including an azimuth or a size, position information, and the like, of the public road map (Step S45). In addition, the information processing device 100 sends map data of the public road map information to the superimposition processing unit (Step S52). In addition, the information processing device 100 sends the position information (longitude, latitude or the like) included in the public road map information to the comparator via the parser (Step S49).

Subsequently, the information processing device 100 compares the information regarding the sizes and the azimuths of the private map information and the public road map information with each other with the comparator, and sends the compared information to a scaler (Step S47). The information processing device 100 executes processing for aligning the size or the azimuth of the private map information with that of the public map information, in the scaler. Then, the information processing device 100 sends the adjusted private map information to a Shifter via the scaler (Step S48).

In addition, the information processing device 100 compares the position information acquired from the private map information and the public road map information with each other with a comparator, and sends the compared information to the shifter (Step S50). The information processing device 100 corrects the private map information whose size or azimuth is aligned with that of the public road map information so as to eliminate a difference (deviation) between the position information calculated by the comparator, in the shifter. The information processing device 100 sends the corrected private map information to the superimposition processing unit (Step S51).

Then, the information processing device 100 generates the connection map information by superimposing the corrected private map information and the public road map information in the superimposition processing unit. At this time, the information processing device 100 superimposes the format of the private map information, the meta information such as a traffic rule or the like included in the private map information, or the like, on the connection map information. Then, the information processing device 100 stores the generated connection map information in the connection map storage unit 124.

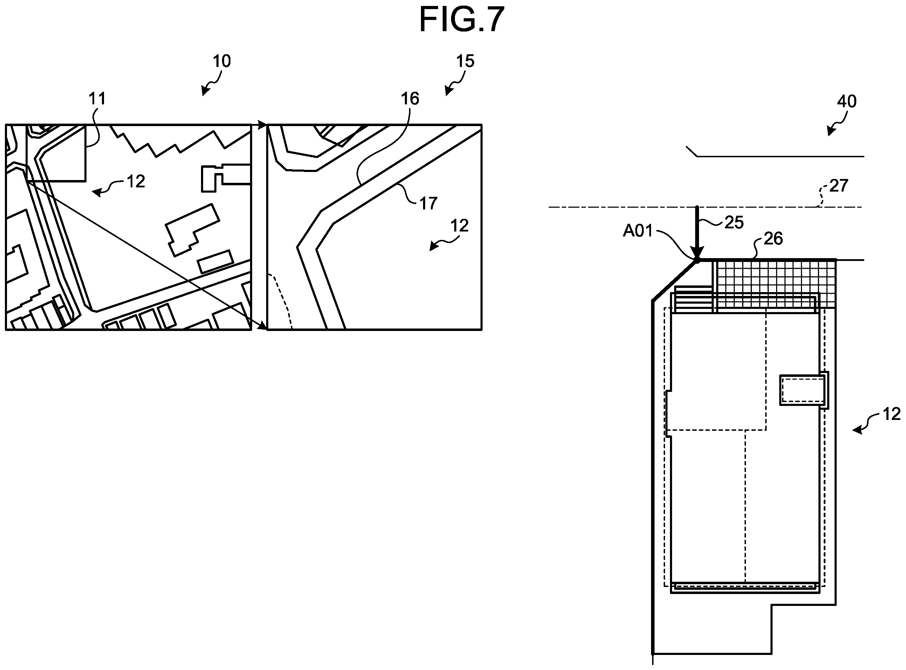

Next, connection processing by the information processing device 100 will be specifically described with reference to plan views of FIGS. 7 to 9. FIG. 7 is a first plan view for describing connection processing according to the first embodiment of the present disclosure.

In an example illustrated in FIG. 7, an example in which private map information 40 corresponding to the area 12, which is the private land, is connected to the public road map information 15 is illustrated. Note that in examples of FIGS. 7 to 9, it is assumed that the private map information 40 has a format conforming to the public road map information 15. Note that an example in which the parking lot or the like is installed in the area 12, which is the private land, has been illustrated in FIG. 1, but an example in which a structure such as a house or the like is installed in the area 12 is illustrated in the examples of FIGS. 7 to 9.

For example, in the example of FIG. 7, it is assumed that the private map information 40 includes information indicating a parkable area (lattice pattern portion in FIG. 7) or a positional relationship with the public map information. Specifically, the information indicating the positional relationship with the public map information is a boundary line 26 (thick line in FIG. 7) between the public road and the private land or an end point A01 of the boundary line. A positional relationship of the point A01 with the public road may be decided by a vector 25 indicating a distance and an azimuth from a center line of the public road or an absolute position of the point A01 may be decided by information such as latitude, longitude or the like. Note that the point A01 is not limited to a position illustrated in FIG. 7, and may be any position as long as the positional relationship from the public road is clear.

In a case where the information processing device 100 receives the private map information 40, the information processing device 100 first corrects the private map information 40 to have a size or a azimuth similar to that of the public road map information 15 based on the information regarding a size, an azimuth or the like included in the private map information 40. For example, a state in which the size (scale) or the azimuth of the private map information 40 is different from that of the public road map information 15, such that the private map information 40 and the public road map information 15 cannot be synthesized with each other at a current state is illustrated in FIG. 7.

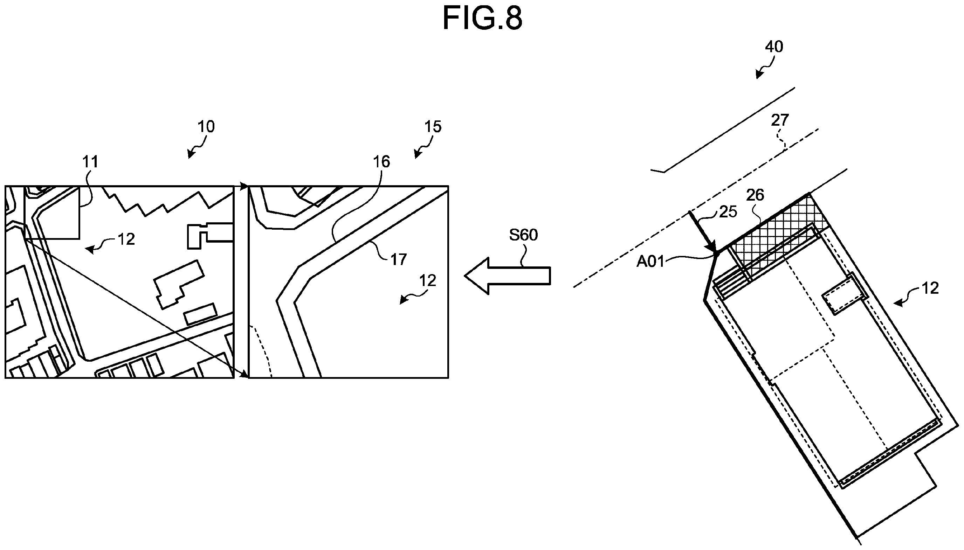

The private map information 40 after being corrected is illustrated in FIG. 8. FIG. 8 is a second plan view for describing connection processing according to the first embodiment of the present disclosure. First, the information processing device 100 corrects the private map information 40 so as to be matched to the size or the azimuth of the public road map information 15. As illustrated in FIG. 8, the size or the azimuth of the private map information 40 after being corrected is aligned with that of the public road map information 15. Thereafter, the information processing device 100 starts processing for superimposing the corrected private map information 40 on the public road map information 15 (Step S60) .

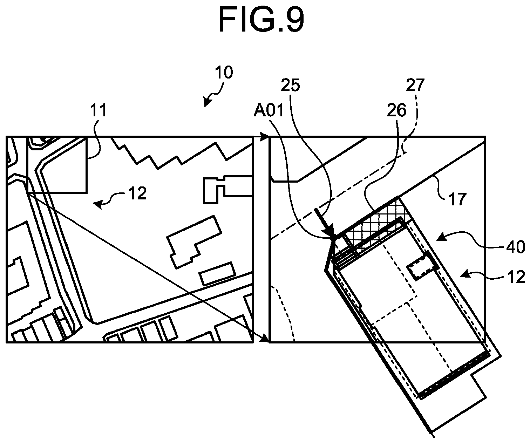

The processing for superimposing the private map information 40 on the public road map information 15 based on a positional relationship with the public road will be described with reference to FIG. 9. FIG. 9 is a third plan view for describing connection processing according to the first embodiment of the present disclosure.

The information processing device 100 performs superimposition by, for example, associating the position information of the public road in the public road map information 15 with information indicating the positional relationship with the public road in the private map information 40 to generate connection map information. Specifically, the information processing device 100 measures a distance between an end point of a sidewalk boundary line 17 between the sidewalk and the private land and a center line 27 of the public road, in the public road map information 15. In addition, the information processing device 100 measures the end point of the boundary line 26 between the public road and the private land and a length of the vector 25 extending from the center line 27 of the public road to the private land at a right angle, in the private map information 40. In other words, the information processing device 100 measures a length from the center line 27 of the public road to the point A01.

Then, the information processing device 100 superimposes the private map information and the public road map information by correcting a position of the private map information 40 so that reference points indicating common positions in the private map information and the public road map information overlap each other. Specifically, the information processing device 100 superimposes the private map information and the public road map information so that the length from the center line 27 of the public road to the point A01 becomes substantially the same as the distance between the end point of the sidewalk boundary line 17 between the sidewalk and the private land and the center line 27 of the public road in the public road map information. That is, the information processing device 100 superimposes positions, sizes, azimuths, or the like, of the private map information and the public road map information so that the point A01 becomes a reference point indicating a common position between the private map information and the public road map information. By such processing, the information processing device 100 can generate the connection map information in which the public road map information 15 and the private map information 40 are connected to each other.

In addition, the information processing device 100 may generate the connection map information based on the comparison with the information indicating the boundary between the private land area and the public road, as described above. For example, the information processing device 100 may generate the connection map information by superimposing the private map information and the public road map information so that a deviation between the sidewalk boundary line 17 illustrated in FIG. 9 and the boundary line 26 between the public road and the private land becomes minimum.

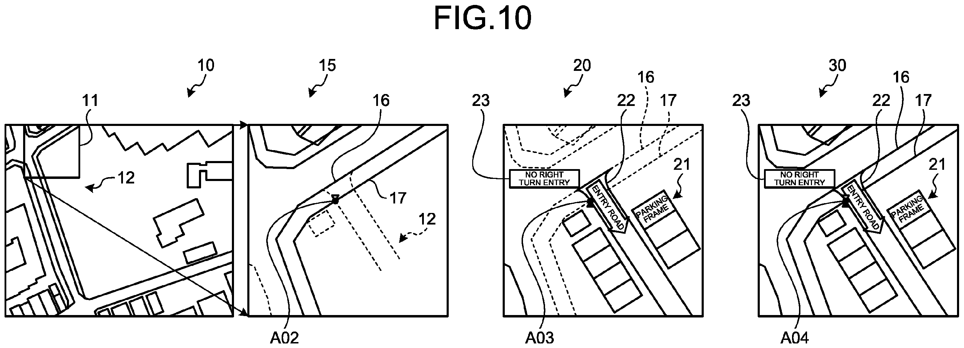

Note that the information processing device 100 may superimpose the private map information 40 on the public road map information 15 based on not only the positional relationship with the public road or the boundary line but also the position information indicating the position of the reference point in the private map information 40. This will be described with reference to FIG. 10. FIG. 10 is a fourth plan view for describing connection processing according to the first embodiment of the present disclosure.

In FIG. 10, similar to FIG. 1, an example in which the public road map information 15 and the private map information 20 are superimposed will be described. In a case of an example of FIG. 10, the information processing device 100 sets a reference point A03, which is an arbitrary point to be referred to for superimposition, in the private map information 20.

Then, the information processing device 100 acquires or measures position information of the reference point A03. For example, in a case where the private map information 20 conforms to the public road map information, the information processing device 100 can acquire or measure position information of any one point in the map based on a satellite positioning system such as a global positioning system (GPS) or the like or a global navigation satellite system (GNSS) signal from a GNSS satellite.

Then, the information processing device 100 specifies a point having the same position information as the position information of the reference point A03 in the public road map information 15. In the example of FIG. 10, it is assumed that the information processing device 100 specifies a point A02 in the public road map information 15.

Subsequently, the information processing device 100 regards the point A02 and the reference point A03 as reference points indicating a common position between the private map information and the public road map information and superimposes the private map information and the public road map information. Therefore, the information processing device 100 obtains connection map information 30. In the connection map information 30, a reference point A04 indicates a common position between the point A02 and the reference point A03.

Note that the information processing device 100 may select the reference point A03 at the stage of the superimposition processing or may receive the private map information in which the reference point has been set in advance, as described above. That is, the information processing device 100 may receive the private map information including the reference point whose position information has been measured in advance, and may generate the connection map information based on the received information. Therefore, the information processing device 100 can save labor for measuring the position information of the reference point at a point in time of the generation processing, and can thus reduce a processing load.

### [1-4. Modification according to first embodiment]

Next, processing in a case where the private map information does not conform to the format of the public road map information or in a case where the private map information has not received the predetermined authentication will be described as a modification of the first embodiment. FIG. 11 is a flowchart illustrating a flow of processing according to a modification of the first embodiment.

As illustrated in FIG. 11, the information processing device 100 matches a position and a size of the private map information to those of the public road map information (Step S71). Note that the private map information may have, for example, a scale or a position in a unique format. For this reason, the information processing device 100 performs processing such as actually aligning the private map information and the public road map information with each other on coordinates by parsing and referring to scale or position information in the unique format, and corrects the position and the size of the private map information so that a discrepancy of the private map information from the position and the size of the public road map information becomes minimum.

Subsequently, the information processing device 100 superimposes the private map information on the public road map information based on a first reference point of the private map information (Step S72). Note that the first reference point is, for example, a point having a common feature between the private map information and the public road map information, such as the end point of the boundary line with the public road, or the like.

Further, the information processing device 100 specifies a point of the public road map information corresponding to a second reference point of the private map information (Step S73). Note that the second reference point is a point having a common feature between the private map information and the public road map information, such as the end point of the boundary line with the public road, or the like, similar to the first reference point, and refers to a point different from the first reference point.

Then, the information processing device 100 superimposes the first reference points, and then measures a deviation between the second reference point and the specified point of the public road map information (Step S74). Subsequently, the information processing device 100 determines whether or not the deviation is within a predetermined threshold value (Step S75).

In a case where the deviation is within the predetermined threshold value (Step S75: Yes), the information processing device 100 determines that there is no hindrance in the connection and connects the private map information and the public road map information to each other (Step S76). On the other hand, in a case where the deviation exceeds the predetermined threshold value (Step S75: No), the information processing device 100 determines that there is a hindrance in the connection, and notifies the user that the connection between the private map information and the public road map information has failed (Step S77).

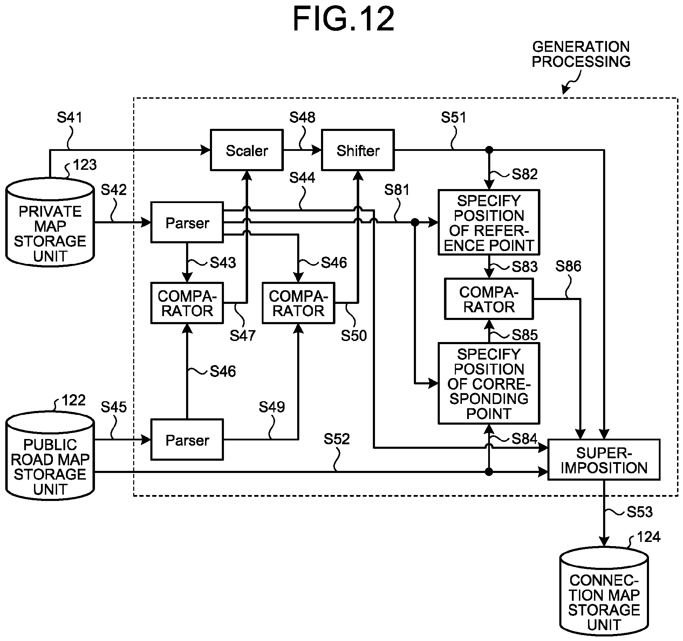

The above processing will be described with reference to FIGS. 12 to 15. FIG. 12 is a diagram for describing a procedure of connection processing according to a modification of the first embodiment. A description for contents similar to those described in FIG. 6 will be omitted.

The information processing device 100 acquires information (position information or information having an arbitrary feature such as an intersection position of the public road and the boundary line, or the like) for specifying a position of an arbitrary point from the meta information included in the private map information (Step S81). In addition, the information processing device 100 selects at least one reference point (for example, the first reference point illustrated in FIG. 11) from the private map information whose position or size has been corrected, and specifies a position based on the meta information (Step S82).

In addition, the information processing device 100 acquires the public road map information, and specifies a position of a corresponding point (for example, the second reference point illustrated in FIG. 11) corresponding to an arbitrary point included in the private map information (Step S84).

Then, the information processing device 100 acquires a position of the reference point (Step S83), acquires the position of the corresponding point (Step S85), and determines a deviation between the respective points using a comparator (Step S86). Then, the information processing device 100 superimposes the private map information and the public road map information based on a determination result in Step S86.

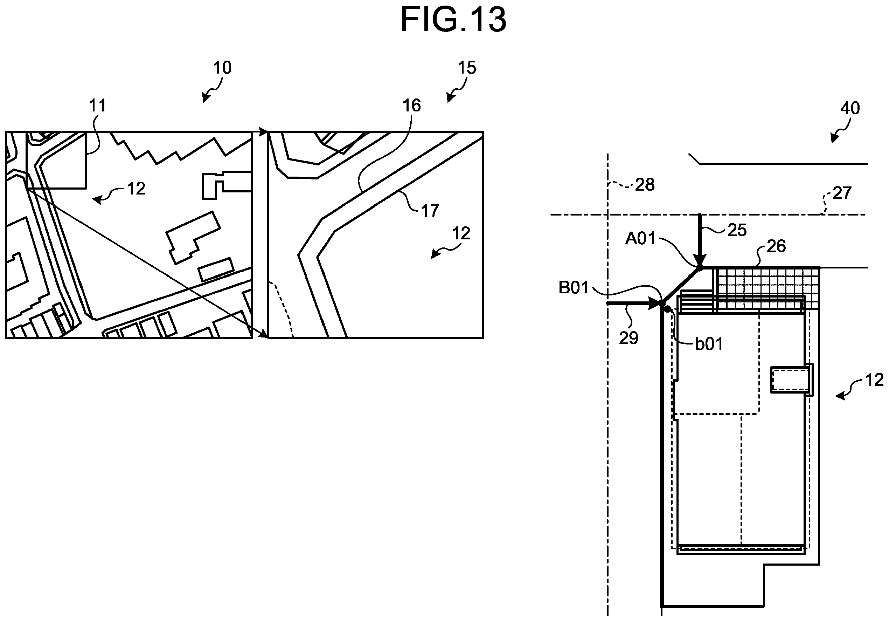

Next, connection processing by the information processing device 100 will be specifically described with reference to plan views of FIGS. 13 to 15. FIG. 13 is a first plan view for describing connection processing according to a modification of the first embodiment.

In an example illustrated in FIG. 13, an example in which private map information 40 corresponding to the area 12, which is the private land, is connected to the public road map information 15 is illustrated. Note that in examples of FIGS. 13 to 15, it is assumed that the private map information 40 does not conform to a format of the public road map information 15.

For example, in the example of FIG. 13, the private map information 40 includes a boundary line 26 between a public road and private land, a point A01, which is an intersection point between a vector 25 and a boundary line 26, and the like. In addition, the private map information 40 includes a point B01, which is an intersection point between a vector 29 extending from a center line 28 of the public road to the private land and the private land. Note that the public road or the center line 27 or the center line 28 of the public road is illustrated for explanation in FIG. 13, but the private map information 40 may not have such information. In this case, as the point A01 or B01, an arbitrary point which easily specifies a common position with the public road map information, such as an end point of a boundary between the private land and the public road, or the like, is selected.

Then, the information processing device 100 specifies a point existing at a position corresponding to the point A01 or the point B01 in the public road map information. For example, the information processing device 100 acquires position information of the point A01, and specifies a point having substantially the same information as the position information on the public road map information as a point corresponding to the point A01. Such a point becomes a reference point (first reference point). In addition, the information processing device 100 acquires position information of the point B01, and specifies a point having substantially the same information as the position information on the public road map information as a point corresponding to the point B01. It is assumed that such a point is a point b01.

In a case where the private map information and the public road map information are superimposed at the first reference point, a slight deviation occurs between the point B01 and the point b01. This is because formats of the private map information and the public road map information are different from each other, such that a discrepancy occurs in information specifying the position or there is a limitation in accuracy of longitude or latitude for specifying the position. FIG. 13 illustrates the position in a case where the point b01 is temporarily plotted on the private map information 40. The deviation between the point B01 and the point b01 illustrated in FIG. 13 becomes a deviation in a case where the public road map information 15 and the private map information 40 are superimposed.

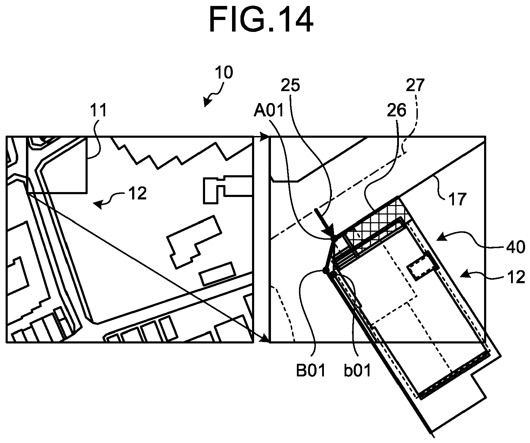

In a case where the deviation between the point B01 and the point b01 illustrated in FIG. 13 is within a predetermined threshold value (for example, within 25 cm in a real space at the same accuracy as accuracy of 25 cm of the public road map information, or the like), the information processing device 100 determines that the superimposition is unlikely to be hindered, and superimposes the public road map information 15 and the private map information 40. FIG. 14 illustrates a plan view when the public road map information 15 and the private map information 40 are superimposed. FIG. 14 is a second plan view for describing connection processing according to a modification of the first embodiment.

As illustrated in FIG. 14, in a case where the deviation between the point B01 and the point b01 is within the predetermined threshold value, there is no significant hindrance even though the public road map information 15 and the private map information 40 are superimposed, and thus, the information processing device 100 can generate the connection map information by such processing.

Note that the public road map information 15 and the private map information 40 are illustrated in two dimensions (plane) in FIG. 14, but there can be a case where the public road map information 15 and the private map information 40 are a three-dimensional map including altitude. In this case, whether or not the deviation (distance) between the point B01 and the point b01 is within the threshold value may be determined by a three-dimensional distance. Therefore, the information processing device 100 can three-dimensionally connect the public road map information and the private map information to each other in consideration of a height. That is, the information processing device 100 can generate connection map information corresponding to, for example, private land having a step with the public road, and can thus contribute to flexible automatic driving.

As described above, the information processing device 100 according to the modification first receives the private map information including scale information and azimuth information of the private map information 40 and the first point A01 and the second point B01 specified by the positional relationship with the public road. Then, the information processing device 100 matches the scale information and the azimuth information of the private map information 40 to those of the public road map information 15. Further, the information processing device 100 connects the private map information 40 and the public road map information 15 to each other with the first point A01 and a first corresponding point corresponding to the point A01 in the public road map information 15 as reference points. Subsequently, the information processing device 100 generates the connection map information in a case where a discrepancy (deviation) in position between the second point B01 and a second corresponding point b01 corresponding to the point B01 in the public road map information 15 when the private map information 40 and the public road map information 15 have been connected to each other is within a predetermined threshold value. Note that the information processing device 100 may superimpose the private map information and the public road map information so that not only a deviation between "points" such as the position of the second corresponding point b01 corresponding to the point B01, but also a deviation between two line segments (distance between the line segments) becomes minimum, for example, when it is assumed that the sidewalk boundary line 17 and the boundary line 26 between the public road and the private land are the two line segments, respectively.

According to such a method, the information processing device 100 compares at least two points with each other and generates the connection map information in a case where a deviation between the two points is within an allowable range. Therefore, the information processing device 100 can generate connection map information enough to be put to practical use even in a case where the formats do not conform to each other and the discrepancy occurs in the private map information and the public road map information.

Note that the information processing device 100 may perform generation processing of the connection map information using position information of at least two points registered in advance in the private map information. According to such processing, the information processing device 100 can connect the private map information and the public road map information to each other without specifying the point A01 or B01 having an arbitrary feature (for example, the end point of the boundary between the public road and the private land, or the like).

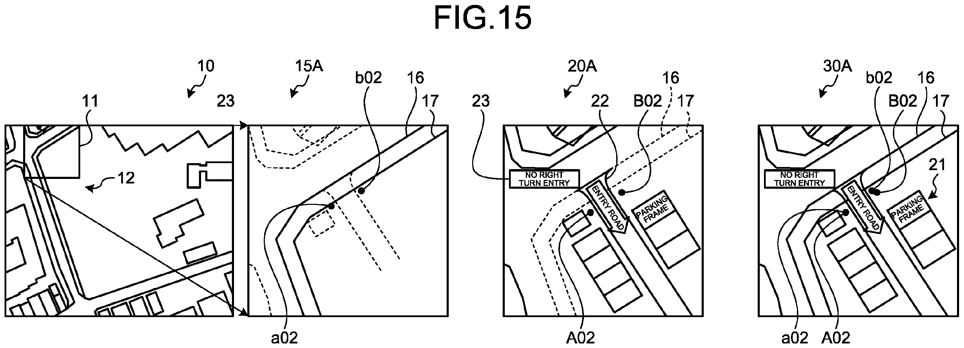

This processing will be described with reference to FIG. 15. FIG. 15 is a third plan view for describing connection processing according to a modification of the first embodiment.

In private map information 20A illustrated in FIG. 15, points A02 and B02, which are intersection points between an entry route into private land and a public road are registered in advance together with position information. Since the position information for the points A02 and B02 is measured in advance, it is possible to specify points corresponding to the points A02 and B02 in public road map information 15A based on the position information.

Therefore, the information processing device 100 specifies a point a02 corresponding to the point A02 and a point b02 corresponding to the point B02 in the public road map information 15A. Then, the information processing device 100 superimposes the points A02 and a02 to connect the private map information and the public road map information to each other. Further, if a deviation between the point B02 and the point b02 is within a predetermined threshold value, the information processing device 100 generates connection map information 30A. On the other hand, if the deviation between the point B02 and the point b02 exceeds the predetermined threshold value, the information processing device 100 does not generate the connection map information 30A and notifies the user that the connection has failed.

As described above, the information processing device 100 according to the modification receives the private map information 20A including scale information and azimuth information of the private map information 20A, and a first point A02 and a second point B02 registered in advance. Then, the information processing device 100 matches the scale information and the azimuth information of the private map information 20A to those of the public road map information 15A, specifies the point a02 corresponding to the point A02 in the public road map information 15A based on position information of the first point A02, and connects the private map information 20A and the public road map information 15A to each other with the points A02 and a02 as reference points. Further, the information processing device 100 generates the connection map information 30A in a case where a discrepancy (deviation) in position information between the point b02 corresponding to the point B02 and the point B02 when the private map information 20A and the public road map information 15A have been connected to each other is within a predetermined threshold value.

Note that in a case where the position information (coordinate) indicating the first point (point A02) described above is three-dimensional, the information processing device 100 may specify the first corresponding point (point a02) based on the three-dimensional position information. Therefore, the information processing device 100 can three-dimensionally connect the public road map information and the private map information to each other in consideration of a height. That is, the information processing device 100 can generate connection map information corresponding to, for example, private land having a step with the public road, and can contribute to flexible automatic driving.

In addition, the information processing device 100 may make a predetermined correction in a case where a deviation occurs between a point on the private map information that can become a reference point and a point on the public road map information corresponding to the point, in the processing described above.

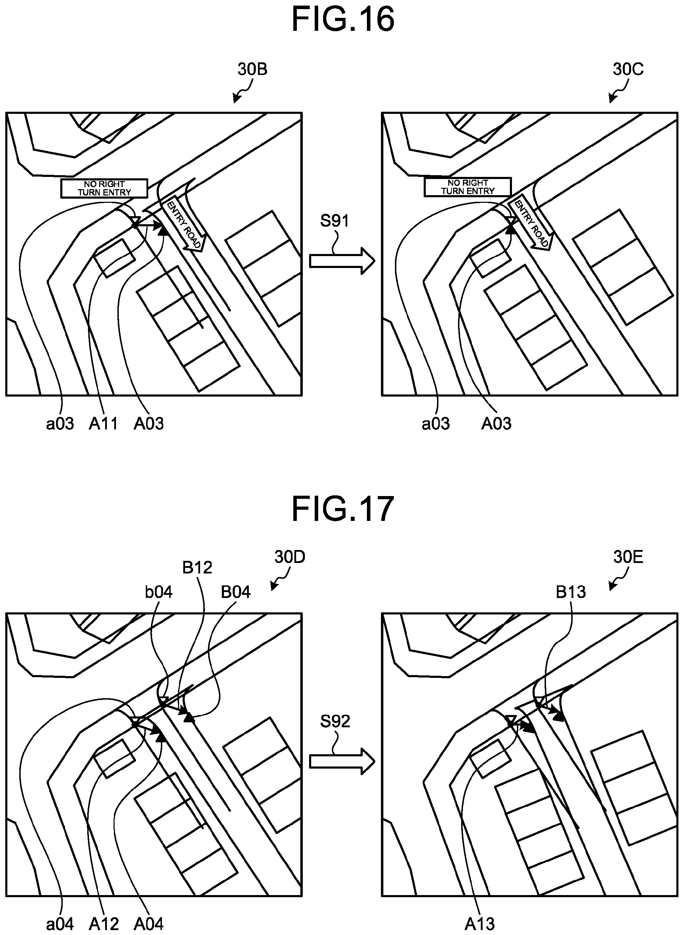

This processing will be described with reference to FIG. 16. FIG. 16 is a fourth plan view for describing connection processing according to a modification of the first embodiment.

For example, it is difficult to allow two points of different map information to completely coincide with each other because information such as latitude, longitude or the like indicating position information has an error depending on performance of a measured subject, or the like. For example, as illustrated in FIG. 16, there is a case where a deviation occurs between position information of a first point A03 registered in private map information and a point a03 of the public road map information corresponding to the first point A03. In this case, if an attempt is made to superimpose the private map information and the public road map information, a deviation can occur as in connection map information 30B illustrated in FIG. 16.

Therefore, the information processing device 100 generates the connection map information 30B, and then generates a vector A11 connecting the point A03 and the point a03 to each other. Then, the information processing device 100 generates connection map information 30C in which the private map information and the public road map information are superimposed at a more accurate position by shifting the private map information by the vector A11. Therefore, the information processing device 100 can obtain map information with higher accuracy.

The above processing may be performed using two different points. This will be described with reference to FIG. 17. FIG. 17 is a fifth plan view for describing connection processing according to a modification of the first embodiment.

For example, as illustrated in FIG. 17, the information processing device 100 generates a vector A12 and a vector B12 each indicating deviations between a first point A04 and a second point B04 in private map information and a first point a04 and a second point b04 in public road map information, on connection map information 30D. Then, in a case where the vector A12 and the vector B12 are equal to each other as a vector, the information processing device 100 obtains more accurate connection map information 30E by shifting the private map information by the vector. Note that in a case where the vector A12 and the vector B12 are different from each other as a vector, the information processing device 100 may obtain more accurate connection map information 30E by shifting the private map information so that the deviation becomes minimum.

### (2. Second embodiment)

### [2-1. Configuration of information processing system according to second embodiment]

Next, a second embodiment will be described. In the second embodiment, it is assumed that private land is a relatively small parking lot or the like. For example, the second embodiment corresponds to a situation in which an information processing device 100 (automatic driving vehicle) does not need to transmit information to a parking lot side, such as a situation in which a parking space of private land is limited to one section, or the like.

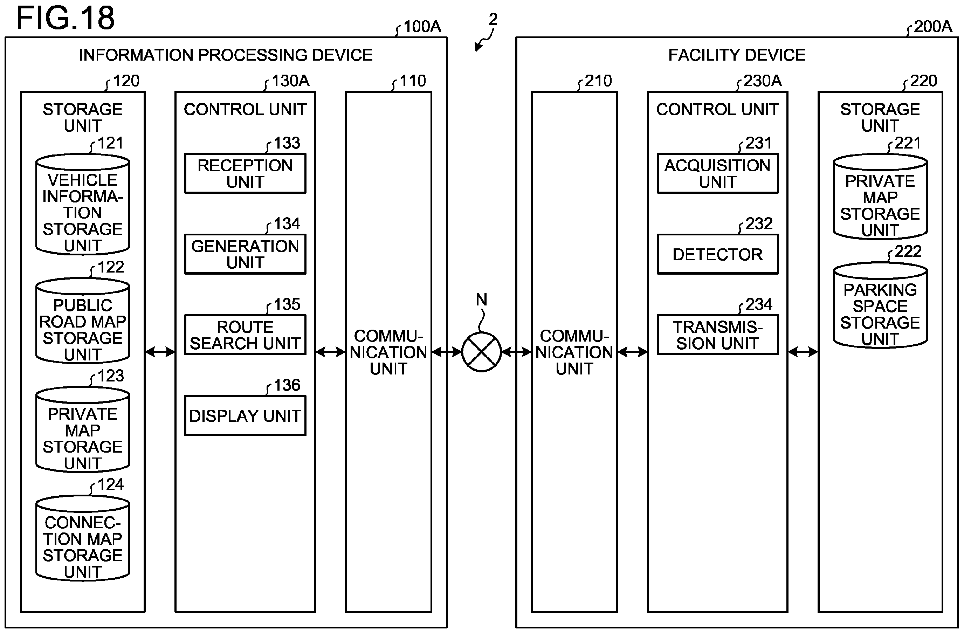

FIG. 18 is a diagram illustrating a configuration example of an information processing system 2 according to the second embodiment of the present disclosure. As illustrated in FIG. 18, the information processing system 2 according to the second embodiment includes an information processing device 100A and a facility device 200A. Note that a description for configurations similar to the configurations according to the first embodiment will be omitted.

The information processing device 100A does not transmit a parking intention or the like, and receives parking lot information (private map information) automatically transmitted from the facility device 200, for example, every predetermined time, unlike the first embodiment.

The facility device 200A does not receive a transmission request for parking lot information, a parking intention, or the like from the information processing device 100, and transmits parking lot information (private map information) to a vehicle located in the vicinity of the parking lot, for example, every predetermined time, unlike the first embodiment.

### [2-2. Procedure of information processing according to second embodiment]

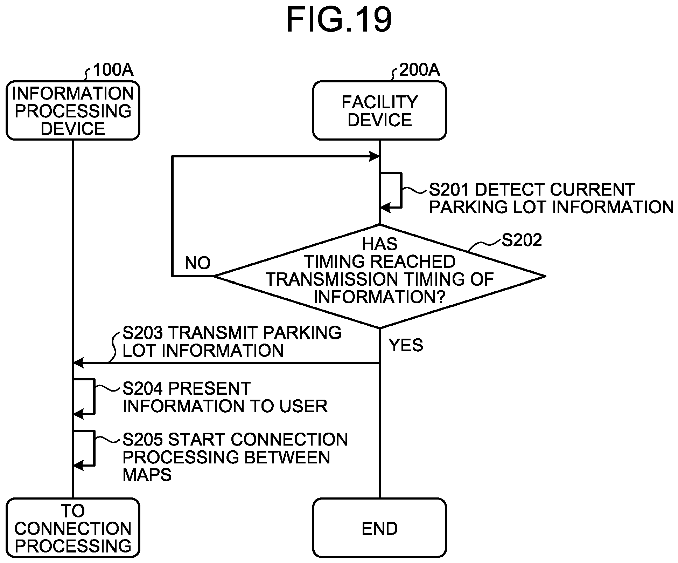

Next, a procedure of information processing according to the second embodiment will be described with reference to FIG. 19. FIG. 19 is a sequence diagram illustrating a flow of processing according to the second embodiment of the present disclosure.

As illustrated in FIG. 19, the facility device 200A detects current parking lot information to acquire the parking lot information (Step S201). Thereafter, the facility device 200A determines whether or not a timing has reached a transmission timing of information (Step S202).

In a case where the timing has not reached to the transmission timing of the information (Step S202: No), the facility device 200A waits until the timing reaches the transmission timing of the information. On the other hand, in a case where the timing has reached the transmission timing of the information (Step S202: Yes), the facility device 200A transmits the parking lot information to the information processing device 100A (Step S203).

The information processing device 100A presents the received information to a user (Step S204). Then, the information processing device 100A starts connection processing between maps, for example, with a user's indication indicating that he/she is to park a vehicle in the parking lot, or the like, as a trigger (Step S205). Note that generation processing of a map is common to that of the first embodiment.

### (3. Third embodiment)

### [3-1. Configuration of information processing system according to third embodiment]

Next, a third embodiment will be described. In the third embodiment, it is assumed that private land is a parking lot or a store (for example, a gas station or the like) without entry/exist management. That is, the third embodiment corresponds to a situation in which a private land side has a scale at which it is not necessary to detect a situation of a parking lot in real time and a need to transmit the detected information to an information processing device 100 (automatic driving vehicle) is low.

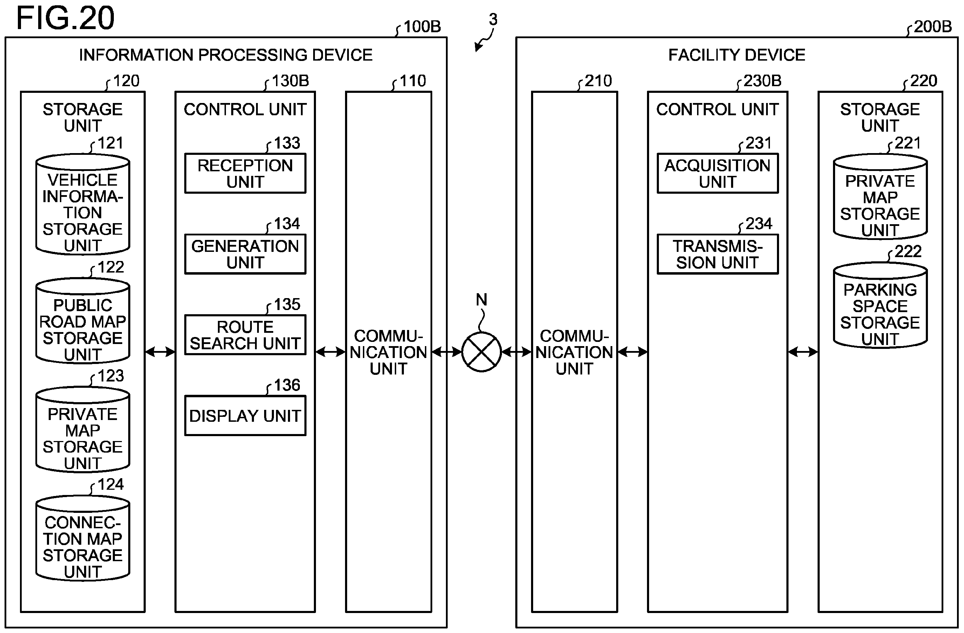

FIG. 20 is a diagram illustrating a configuration example of an information processing system 3 according to the third embodiment of the present disclosure. As illustrated in FIG. 20, the information processing system 3 according to the third embodiment includes an information processing device 100B and a facility device 200B. Note that a description for configurations similar to the configurations according to the first embodiment and the second embodiment will be omitted.

The information processing device 100B may be configured by processing units similar to those of the second embodiment. The facility device 200B does not include a detector that detects a current state of a parking lot, unlike the second embodiment.

### [3-2. Procedure of information processing according to third embodiment]

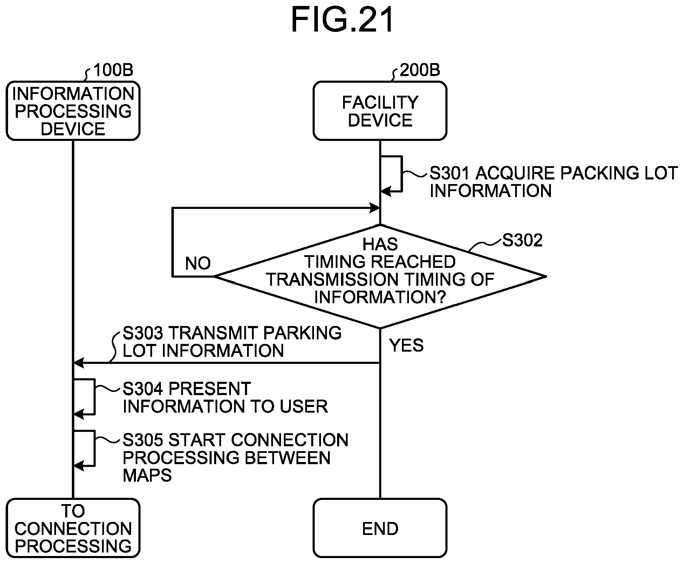

Next, a procedure of information processing according to the third embodiment will be described with reference to FIG. 21. FIG. 21 is a sequence diagram illustrating a flow of processing according to the third embodiment of the present disclosure.

As illustrated in FIG. 21, the facility device 200B acquires parking lot information managed by an own device (Step S301). Thereafter, the facility device 200B determines whether or not a timing has reached a transmission timing of information (Step S302).

In a case where the timing has not reached to the transmission timing of the information (Step S302: No), the facility device 200B waits until the timing reaches the transmission timing of the information. On the other hand, in a case where the timing has reached the transmission timing of the information (Step S302: Yes), the facility device 200B transmits the parking lot information to the information processing device 100B (Step S303).

The information processing device 100B presents the received information to a user (Step S304). Then, the information processing device 100B starts connection processing between maps, for example, with a user's indication indicating that he/she is to park a vehicle in the parking lot, or the like, as a trigger (Step S305). Note that generation processing of a map is common to that of the first embodiment.

### (4. Fourth embodiment)

Next, a fourth embodiment will be described. In the fourth embodiment, it is assumed that private land is a proprietary parking lot such as a monthly parking lot or the like and a parking position and an empty situation do not change in principle. In this case, automatic driving of the vehicle becomes possible if an information processing device 100 acquires private map information such as parking lot information or the like in advance, and thus, the information processing device 100 does not need to perform transmission and reception with a facility device 200. That is, in an information processing system according to the fourth embodiment, the facility device 200 is not indispensable, and the information processing device 100 is only required to acquire the private map information in advance.

### (5. Other embodiments)

The processing according to each of the embodiments described above may be performed in various different forms other than each of the embodiments described above.

### [5-1. Configuration of autonomous moving object]

For example, the information processing device 100 according to the present disclosure may be an autonomous moving object (automobile) capable of automatic driving. In this case, the information processing device 100 may have the following configuration in addition to the configuration illustrated in FIG. 2. Note that each unit illustrated below may be included in, for example, the control unit 130 illustrated in FIG. 2.

For example, the information processing device 100 includes an automatic driving control unit, a detection unit, a self-position estimation unit, a situation analysis unit, a planning unit, and an operation control unit. In addition, the information processing device 100 may include an input unit, a data acquisition unit, a vehicle communication unit, an in-vehicle device, an output control unit, an output unit, a drive system control unit, a drive system, a body system control unit, a body system, a vehicle storage unit, and an automatic driving control unit.

The input unit includes a device used by a passenger to input various data, instructions or the like. For example, the input unit includes operation devices such as a touch panel, a button, a microphone, a switch, a lever, and the like, and an operation device and the like that can perform input by a method other than a manual operation by a voice, a gesture or the like. In addition, for example, the input unit may be a remote control device using infrared rays or other radio waves, or an external connection device such as a mobile device, a wearable device or the like corresponding to an operation of the information processing device 100. The input unit generates an input signal based on data, instruction or the like input by the passenger, and supplies the generated input signal to each unit of the information processing device 100.

The data acquisition unit includes various sensors or the like that acquire data used for processing of the information processing device 100, and supplies the acquired data to each unit of the information processing device 100.

For example, the data acquisition unit includes various sensors for detecting a state of an own vehicle, and the like. Specifically, for example, the data acquisition unit includes a gyro sensor, an acceleration sensor, an inertial measurement unit (IMU), and a sensor for detecting an operation amount of an accelerator pedal, an operation amount of a brake pedal, a steering angle of a steering wheel, an engine speed, motor revolutions, a rotation speed of a wheel, or the like.

In addition, for example, the data acquisition unit includes various sensors for detecting information outside the own vehicle. Specifically, for example, the data acquisition unit includes an image capturing device such as a time of flight (ToF) camera, a stereo camera, a monocular camera, an infrared camera, other cameras, and the like. In addition, for example, the data acquisition unit includes an environment sensor for detecting weather, atmospheric phenomena or the like, and a surrounding information detection sensor for detecting an object around the own vehicle. The environment sensor includes, for example, a raindrop sensor, a fog sensor, a sunshine sensor, a snow sensor, and the like. The surrounding information detection sensor includes, for example, an ultrasonic sensor, a light detection and ranging or a laser imaging detection and ranging (LiDAR), a sonar, and the like.

Further, for example, the data acquisition unit includes various sensors for detecting a current position of the own vehicle. Specifically, for example, the data acquisition unit includes a global navigation satellite system (GNSS) receiver or the like receiving a GNSS signal from a GNSS satellite.

In addition, for example, the data acquisition unit includes various sensors for detecting information in the vehicle. Specifically, for example, the data acquisition unit includes an image capturing device that captures an image of the driver, a biological sensor that detects biological information of the driver, a microphone that collects sound in a vehicle interior, and the like. The biological sensor is provided on, for example, a seat surface, a steering wheel or the like, and detects biological information of a passenger sitting on a seat or the driver holding the steering wheel.

The vehicle communication unit performs communication with an in-vehicle device and various devices outside the vehicle, a server, a base station, and the like, and transmits data supplied from each unit of the information processing device 100 or supplies received data to each unit of the information processing device 100. Note that a communication protocol supported by the vehicle communication unit is not particularly limited, and the vehicle communication unit can also support a plurality of types of communication protocols.

For example, the vehicle communication unit performs wireless communication with the in-vehicle device by a wireless local area network (LAN), Bluetooth (registered trademark), near field communication (NFC), a wireless universal serial bus (WUSB), or the like. In addition, for example, the vehicle communication unit performs wired communication with the in-vehicle device by a universal serial bus (USB), a high-definition multimedia interface (HDMI) (registered trademark), a mobile high-definition link (MHL), or the like, via a connection terminal (and a cable if necessary).

Further, for example, the vehicle communication unit performs communication with a device (for example, an application server or a control server) existing on an external network (for example, the Internet, a cloud network, or a network unique to an operator) via a base station or an access point. In addition, for example, the vehicle communication unit performs communication with a terminal (for example, a terminal of a pedestrian or a shop or a machine type communication (MTC) terminal) existing in the vicinity of the own vehicle using a peer to peer (P2P) technology. Further, for example, the vehicle communication unit performs V2X communication such as vehicle-to-vehicle communication, vehicle-to-infrastructure communication, vehicle-to-home communication, vehicle-to-pedestrian communication, and the like. In addition, for example, the vehicle communication unit includes a beacon reception unit to receive a radio wave or an electromagnetic wave transmitted from a wireless station or the like installed on a road and acquire information such as a current position, traffic congestion, a traffic rule, a required time, or the like.

The in-vehicle device includes, for example, a mobile device or a wearable device possessed by the passenger, an information device carried in or attached to the own vehicle, a navigation device that searches for a route to an arbitrary destination, and the like.

The output control unit controls output of various information to the passenger of the vehicle or the outside of the own vehicle. For example, the output control unit generates an output signal including at least one of visual information (for example, image data) or auditory information (for example, audio data), and supplies the generated output signal to the output unit to control the output of the visual information and the auditory information from the output unit. Specifically, for example, the output control unit synthesizes image data captured by different image capturing devices of the data acquisition unit with each other to generate an overhead image or a panoramic image, and supplies an output signal including the generated image to the output unit. In addition, for example, the output control unit generates audio data including a warning sound, a warning message or the like for danger such as collision, contact, entry into a danger zone, or the like, and supplies an output signal including the generated audio data to the output unit.

The output unit includes a device capable of outputting the visual information or the auditory information to the passenger of the own vehicle or the outside of the vehicle. For example, the output unit includes a display device, an instrument panel, an audio speaker, a headphone, a wearable device such as a spectacle-type display or the like worn by the passenger, a projector, a lamp, and the like. The display device provided in the output unit may be a device that displays visual information within a driver's field of view, such as a head-up display, a transmissive display, a device having an augmented reality (AR) display function, or the like, in addition to a device having a normal display.

The drive system control unit controls the drive system by generating various control signals and supplying the generated control signals to the drive system. In addition, the drive system control unit supplies a control signal to each unit other than the drive system, if necessary, to perform notification of a control state of the drive system, or the like.

The drive system includes various devices regarding a drive system of the own vehicle. For example, the drive system includes a drive force generating device for generating a drive force, such as an internal combustion engine, a drive motor or the like, a drive force transmission mechanism for transmitting the drive force to wheels, a steering mechanism adjusting a steering angle, a braking device generating a braking force, an antilock brake system (ABS), an electronic stability control (ESC), an electric power steering device, and the like.

The body system control unit controls the body system by generating various control signals and supplying the generated control signals to the body system. In addition, the body system control unit supplies a control signal to each unit other than the body system, if necessary, to perform notification of a control state of the body system, or the like.

The body system includes various body devices mounted on a vehicle body. For example, the body system includes a keyless entry system, a smart key system, a power window device, a power seat, a steering wheel, an air conditioner, various lamps (for example, a headlamp, a back lamp, a brake lamp, winkers, a fog lamp, and the like), and the like.

The vehicle storage unit includes, for example, a read only memory (ROM), a random access memory (RAM), a magnetic storage device such as a hard disc drive (HDD) or the like, a semiconductor storage device, an optical storage device, a magneto-optical storage device, and the like. The vehicle storage unit stores various programs, data, and the like used by each unit of the information processing device 100. For example, the vehicle storage unit stores map data such as a three-dimensional high-accuracy map such as a dynamic map or the like, a global map having a lower accuracy than the high-accuracy map and covering a wide area, a local map including information of the surrounding of the own vehicle, and the like.

The automatic driving control unit performs controls regarding automatic driving such as autonomous driving, driving support or the like. Specifically, for example, the automatic driving control unit performs cooperative control for the purpose of realizing a function of an advanced driver assistance system (ADAS) including collision avoidance or shock mitigation of the own vehicle, following traveling based on an inter-vehicle distance, vehicle speed maintaining traveling, collision warning of the own vehicle, lane departure warning of the own vehicle, and the like. In addition, for example, the automatic driving control unit performs cooperative control for the purpose of automatic driving or the like in which the vehicle autonomously travels without depending on a driver's operation. The automatic driving control unit includes a detection unit, a self-position estimation unit, a situation analysis unit, a planning unit, and an operation control unit.

The detection unit detects various information necessary for controlling the automatic driving. The detection unit includes an outside-vehicle information detection unit, an inside-vehicle information detection unit, and a vehicle state detection unit.

The outside-vehicle information detection unit performs detection processing of information outside the own vehicle based on data or signals from each unit of the information processing device 100. For example, the outside-vehicle information detection unit performs detection processing, recognition processing, and tracking processing of an object around the own vehicle, and detection processing of a distance to the object. The object to be detected includes, for example, a vehicle, a person, an obstacle, a structure, a road, a traffic light, a traffic sign, a road marking, and the like. In addition, for example, the outside-vehicle information detection unit performs detection processing of the surrounding environment of the own vehicle. The surrounding environment to be detected includes, for example, weather, temperature, humidity, brightness, a state of a road surface, and the like. The outside-vehicle information detection unit supplies data indicating a result of the detection processing to the self-position estimation unit, a map parsing unit, a traffic rule recognition unit, and a situation recognition unit of the situation analysis unit, an emergency avoidance unit of the operation control unit, and the like.

The inside-vehicle information detection unit performs detection processing of information inside the vehicle based on data or signals from each unit of the information processing device 100. For example, the inside-vehicle information detection unit performs authentication processing and recognition processing of the driver, detection processing of a state of the driver, detection processing of the passenger, detection processing of an environment inside the vehicle, and the like. The state of the driver to be detected includes, for example, a physical condition, an awakening degree, a concentration degree, a fatigue degree, a sight line direction, and the like. The environment inside the vehicle to be detected includes, for example, temperature, humidity, brightness, odor, and the like. The inside-vehicle information detection unit supplies data indicating a result of the detection processing to the situation recognition unit of the situation analysis unit, the emergency avoidance unit of the operation control unit, and the like.

The vehicle state detection unit performs detection processing of a state of the own vehicle based on data or signals from each unit of the information processing device 100. The state of the own vehicle to be detected includes, for example, a speed, an acceleration, a steering angle, the presence or absence and a content of abnormality, a state of a driving operation, a position and an inclination of a power seat, a state of a door lock, states of the other in-vehicle devices, and the like. The vehicle state detection unit supplies data indicating a result of the detection processing to the situation recognition unit of the situation analysis unit, the emergency avoidance unit of the operation control unit, and the like.

The self-position estimation unit performs estimation processing of a position, a posture and the like of the own vehicle based on data or signals from each unit of the information processing device 100 such as the outside-vehicle information detection unit, the situation recognition unit of the situation analysis unit, and the like. In addition, the self-position estimation unit generates a local map (hereinafter, referred to as a self-position estimation map) used to estimate a self-position, if necessary. The self-position estimation map is, for example, a highly accurate map using a technology such as simultaneous localization and mapping (SLAM) or the like. The self-position estimation unit supplies data indicating a result of the estimation processing to the map parsing unit, the traffic rule recognition unit, the situation recognition unit, and the like, of the situation analysis unit. In addition, the self-position estimation unit stores the self-position estimation map in the vehicle storage unit.

The situation analysis unit performs analysis processing of a situation of the own vehicle and a situation around the own vehicle. The situation analysis unit includes the map parsing unit, the traffic rule recognition unit, the situation recognition unit, and a situation prediction unit.

The map parsing unit performs parsing processing of various maps stored in the vehicle storage unit while using data or signals from each unit of the information processing device 100 such as the self-position estimation unit, the outside-vehicle information detection unit and the like, if necessary, and constructs a map including information required for processing of the automatic driving. The map parsing unit supplies the constructed map to the traffic rule recognition unit, the situation recognition unit, the situation prediction unit, and a route planning unit, an action planning unit, an operation planning unit, and the like, of the planning unit.

The traffic rule recognition unit performs recognition processing of a traffic rule around the own vehicle based on data or signals from each unit of the information processing device 100 such as the self-position estimation unit, the outside-vehicle information detection unit, the map parsing unit, and the like. By this recognition processing, for example, a position and a state of a signal around the own vehicle, a content of a traffic regulation around the own vehicle, a lane in which the own vehicle can travel, and the like, are recognized. The traffic rule recognition unit supplies data indicating a result of the recognition processing to the situation prediction unit and the like.

The situation recognition unit performs recognition processing of a situation regarding the own vehicle based on data or signals from each unit of the information processing device 100 such as the self-position estimation unit, the outside-vehicle information detection unit, the inside-vehicle information detection unit, the vehicle state detection unit, the map parsing unit, and the like. For example, the situation recognition unit performs recognition processing of the situation of the own vehicle, the situation around the own vehicle, a situation of the driver of the own vehicle, and the like. In addition, the situation recognition unit generates a local map (hereinafter, referred to as a situation recognition map) used to recognize the situation around the own vehicle, if necessary. The situation recognition map is, for example, an occupancy grid map.

The situation of the own vehicle to be recognized includes, for example, a position, a posture, and a motion (for example, a speed, an acceleration, a moving direction, or the like) of the own vehicle, the presence or absence and a content of abnormality, and the like. The situation around the own vehicle to be recognized includes, for example, a type and a position of a stationary object around the own vehicle, a type, a position and a motion (for example, a speed, an acceleration, a moving direction, or the like) of a moving object around the own vehicle, a configuration of a road and a state of a road surface around the own vehicle, and weather, temperature, humidity, and brightness around the own vehicle, and the like. The state of the driver to be recognized includes, for example, a physical condition, an awakening degree, a concentration degree, a fatigue degree, a motion of a sight line, a driving operation, and the like.

The situation recognition unit supplies data (including the situation recognition map if necessary) indicating a result of the recognition processing to the self-position estimation unit, the situation prediction unit, and the like. In addition, the situation recognition unit stores the situation recognition map in the vehicle storage unit.

The situation prediction unit performs prediction processing of the situation regarding the own vehicle based on data or signals from each unit of the information processing device 100 such as the map parsing unit, the traffic rule recognition unit, the situation recognition unit, and the like. For example, the situation prediction unit performs prediction processing of the situation of the own vehicle, the situation around the own vehicle, the situation of the driver, and the like.

The situation of the own vehicle to be predicted includes, for example, behavior of the own vehicle, occurrence of abnormality, a travelable distance, and the like. The situation around the own vehicle to be predicted includes, for example, behavior of a moving object around the own vehicle, a change in a state of a signal, a change in an environment such as weather or the like, and the like. The situation of the driver to be predicted includes, for example, behavior and a physical condition of the driver, and the like.

The situation prediction unit supplies data indicating a result of the prediction processing to the route planning unit, the action planning unit, and the operation planning unit of the planning unit, and the like, together with the data from the traffic rule recognition unit and the situation recognition unit.

The route planning unit plans a route to a destination based on data or signals from each unit of the information processing device 100 such as the map parsing unit, the situation prediction unit and the like. For example, the route planning unit sets a route from a current position to a designated destination based on the global map. In addition, for example, the route planning unit appropriately changes the route based on a situation such as traffic congestion, an accident, a traffic regulation, construction, or the like, a physical condition of the driver, and the like. The route planning unit supplies data indicating the planned route to the action planning unit and the like.

The action planning unit plans an action of the own vehicle for safely traveling along the route planned by the route planning unit within a planned time based on data or signals from each unit of the information processing device 100 such as the map parsing unit, the situation prediction unit and the like. For example, the action planning unit performs planning of start, stop, a traveling direction (for example, a forward movement, a backward movement, a left turn, a right turn, a change of direction, or the like), a traveling lane, a traveling speed, overtaking, and the like. The action planning unit supplies data indicating the planned action of the own vehicle to the operation planning unit and the like.

The operation planning unit plans an operation of the own vehicle for realizing the action planned by the action planning unit based on data or signals from each unit of the information processing device 100 such as the map parsing unit, the situation prediction unit and the like. For example, the operation planning unit performs planning of acceleration, deceleration, a traveling track, and the like. The operation planning unit supplies data indicating the planned operation of the own vehicle to an acceleration/deceleration control unit, a direction control unit and the like of the operation control unit.

The operation control unit controls the operation of the own vehicle. The operation control unit includes the emergency avoidance unit, the acceleration/deceleration control unit, and the direction control unit.

The emergency avoidance unit performs detection processing of an emergency such as collision, contact, entry into a danger zone, abnormality of the driver, abnormality of the vehicle, or the like, based on detection results of the outside-vehicle information detection unit, the inside-vehicle information detection unit, and the vehicle state detection unit. The emergency avoidance unit plans an operation of the own vehicle for avoiding the emergency, such as a sudden stop, a sharp turn or the like in a case where it has detected occurrence of the emergency. The emergency avoidance unit supplies data indicating the planned operation of the own vehicle to an acceleration/deceleration control unit, the direction control unit and the like.

The acceleration/deceleration control unit performs acceleration/deceleration control for realizing the operation of the own vehicle planned by the operation planning unit or the emergency avoidance unit. For example, the acceleration/deceleration control unit calculates a control target value of a drive force generating device or a braking device for realizing planned acceleration, deceleration, or sudden stop, and supplies a control command indicating the calculated control target value to the drive system control unit.

The direction control unit performs direction control for realizing the operation of the own vehicle planned by the operation planning unit or the emergency avoidance unit. For example, the direction control unit calculates a control target value of a steering mechanism for realizing a traveling track or a sharp turn planned by the operation planning unit or the emergency avoidance unit and supplies a control command indicating the calculated control target value to the drive system control unit.

### [5-2. Others]

All or some of the processing described as being automatically performed among the respective processing described in each of the embodiments described above can be manually performed or all or some of the processing described as being manually performed among the respective processing described in each of the embodiments described above can be automatically performed by a known method. In addition, processing procedures, specific names, and information including various data or parameters illustrated in the above document or the drawings can be arbitrarily changed unless otherwise specified. For example, various information illustrated in each drawing is not limited to the illustrated information.

In addition, each component of the respective devices that are illustrated is a functional concept, and does not necessarily have to be physically configured as illustrated. That is, specific forms of distribution and integration of the respective devices are not limited to those illustrated, and all or some of the devices can be configured to be functionally or physically distributed and integrated in any unit according to various loads, use situations or the like.

In addition, each of the embodiments and the modification described above can be appropriately combined with each other within a range in which processing contents are not inconsistent with each other.

In addition, effects described in the present specification are merely examples and are not limited, and other effects may be provided.

### (6. Hardware configuration)

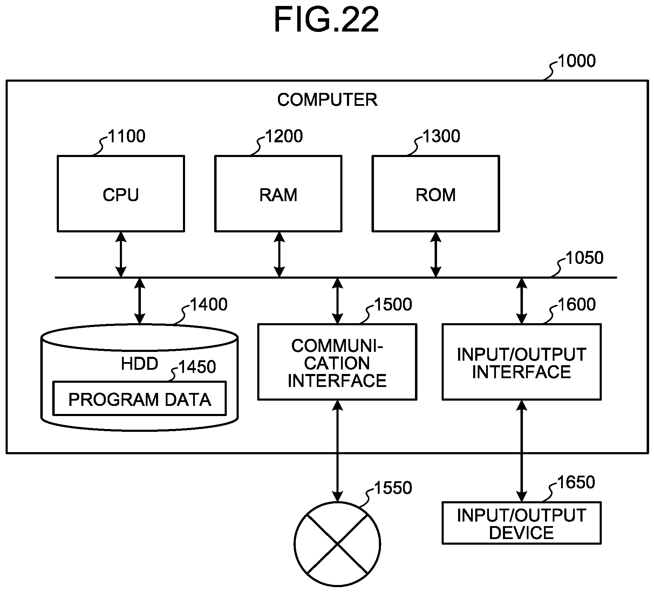

The information devices such as the information processing device 100, the facility device 200 and the like according to each of the embodiments described above are realized by, for example, a computer 1000 having a configuration as illustrated in FIG. 22. Hereinafter, the information processing device 100 according to the first embodiment will be described as an example. FIG. 22 is a hardware configuration diagram illustrating an example of a computer 1000 that realizes a function of the information processing device 100. The computer 1000 includes a CPU 1100, a RAM 1200, a read only memory (ROM) 1300, a hard disk drive (HDD) 1400, a communication interface 1500, and an input/output interface 1600. Respective units of the computer 1000 are connected to each other by a bus 1050.

The CPU 1100 operates based on a program stored in the ROM 1300 or the HDD 1400, and controls each unit. For example, the CPU 1100 expands the program stored in the ROM 1300 or the HDD 1400 in the RAM 1200 to execute processing corresponding to various programs.

The ROM 1300 stores a boot program such as a basic input output system (BIOS) or the like executed by the CPU 1100 at the time of start-up of the computer 1000, a program dependent on hardware of the computer 1000, or the like.

The HDD 1400 is a computer-readable recording medium that non-temporarily records a program executed by the CPU 1100, data used by such a program, and the like. Specifically, the HDD 1400 is a recording medium that records an information processing program according to the present disclosure, which is an example of program data 1450.

The communication interface 1500 is an interface for connecting the computer 1000 to an external network 1550 (for example, the Internet). For example, the CPU 1100 receives data from another device or transmits data generated by the CPU 1100 to another device, via the communication interface 1500.

The input/output interface 1600 is an interface for connecting an input/output device 1650 and the computer 1000 to each other. For example, the CPU 1100 receives data from an input device such as a keyboard, a mouse or the like via the input/output interface 1600. In addition, the CPU 1100 also transmits data to an output device such as a display, a speaker, a printer, or the like, via the input/output interface 1600. In addition, the input/output interface 1600 may function as a media interface that reads a program or the like recorded in a predetermined recording medium. The medium is, for example, an optical recording medium such as a digital versatile disc (DVD), a phase change rewritable disk (PD) or the like, a magneto-optical recording medium such as a magneto-optical disk (MO) or the like, a tape medium, a magnetic recording medium, a semiconductor memory, or the like.

For example, in a case where the computer 1000 functions as the information processing device 100 according to the first embodiment, the CPU 1100 of the computer 1000 realizes a function of the control unit 130 or the like by executing the information processing program loaded on the RAM 1200. In addition, the HDD 1400 stores the information processing program according to the present disclosure or the data in the storage unit 120. Note that the CPU 1100 reads and executes the program data 1450 from the HDD 1400, but as another example, these programs may be acquired from another device via the external network 1550.

Note that the present technology can also have the following configuration.
(1) An information processing device comprising:
   a reception unit that receives private map information including a private land area; and
   a generation unit that generates connection map information in which the private map information and public road map information are connected to each other, based on a reference point, the public road map information including information regarding a public road, and the reference point indicating a common position between the private map information received by the reception unit and the public road map information.
(2) The information processing device according to (1), wherein
   the reception unit receives the private map information including information regarding a route for entering the private land area or exiting from the private land area or a traffic rule in the private land area, and
   the generation unit generates the connection map information in which the information regarding the route for entering the private land area or exiting from the private land area or the traffic rule in the private land area is reflected.
(3) The information processing device according to (2), wherein
   the generation unit generates the connection map information to which a traffic rule included in the private map information is preferentially applied, in a case where a traffic rule included in the public road map information and the traffic rule included in the private map information are different from each other in a predetermined area.
(4) The information processing device according to any one of (1) to (3), further comprising
   a route search unit that searches for a route for entering the private land area or exiting from the private land area, based on the connection map information generated by the generation unit.
(5) The information processing device according to (4), wherein
   the route search unit controls movement of a moving object based on the searched route.
(6) The information processing device according to any one of (1) to (5), wherein
   the reception unit receives the private map information including information indicating an area where a moving object is parkable in the private land area, and
   the generation unit generates the connection map information including the information indicating the area where the moving object is parkable in the private land area.
(7) The information processing device according to any one of (1) to (6), wherein
   the reception unit receives a format of the private map information or information indicating whether or not the private map information has received predetermined authentication, and
   the generation unit generates the connection map information based on the format of the private map information or the information indicating whether or not the private map information has received the predetermined authentication.
(8) The information processing device according to any one of (1) to (7), wherein
   the reception unit receives the private map information conforming to a format of the public road map information, and
   the generation unit generates the connection map information by changing scale information and azimuth information of the private map information so as to be matched to those of the public road map information.
(9) The information processing device according to (8), wherein
   the reception unit receives the private map information including information indicating a positional relationship with the public road, and
   the generation unit specifies the reference point based on the information indicating the positional relationship with the public road and generates the connection map information based on the specified reference point.
(10) The information processing device according to (8) or (9), wherein
   the reception unit receives the private map information including position information indicating a position of a reference point in the private map information, and
   the generation unit generates the connection map information by superimposing the reference points with a position in the public road map information indicated by the position information and the reference point in the private map information as the reference points.
(11) The information processing device according to any one of (8) to (10), wherein
   the reception unit receives the private map information including information indicating a boundary between the private land area and the public road, and
   the generation unit generates the connection map information based on a comparison between the information indicating the boundary, included in the private map information and information indicating a boundary with the private land area in the public road map information.
(12) The information processing device according to any one of (8) to (11), wherein
   the reception unit receives private map information including position information indicating a position of a reference point which is a point registered in advance in the private map information, and
   the generation unit specifies a position in the public road map information indicated by the position information of the reference point, and generates the connection map information by superimposing the reference points with the specified position in the public road map information and the reference point as the reference points.
(13) The information processing device according to any one of (1) to (12), wherein
   the reception unit receives the private map information including scale information and azimuth information of the private map information and a first point and a second point specified by a positional relationship with the public road, and
   the generation unit matches the scale information and the azimuth information of the private map information to those of the public road map information, connects the private map information and the public road map information to each other with the first point and a first corresponding point corresponding to the first point in the public road map information as the reference points, and generates the connection map information in a case where a discrepancy in position between the second point and a second corresponding point corresponding to the second point in the public road map information when the private map information and the public road map information have been connected to each other is within a predetermined threshold value.
(14) The information processing device according to any one of (1) to (13), wherein
   the reception unit receives the private map information including scale information and azimuth information of the private map information and a first point and a second point registered in advance, and
   the generation unit matches the scale information and the azimuth information of the private map information to those of the public road map information, specifies a first corresponding point corresponding to the first point in the public road map information based on position information of the first point, connects the private map information and the public road map information to each other with the first point and the first corresponding point as the reference points, and generates the connection map information in a case where a discrepancy in position between the second point and a second corresponding point corresponding to the second point in the public road map information when the private map information and the public road map information have been connected to each other is within a predetermined threshold value.
(15) The information processing device according to (13) or (14), wherein
   the generation unit specifies the first corresponding point based on three-dimensional position information indicating the first point.
(16) The information processing device according to any one of (1) to (15), further comprising
   a transmission unit that transmits an entry request into the private land area, wherein
   the reception unit receives the private map information from a predetermined device that has responded to the entry request.
(17) The information processing device according to (16), wherein
   the transmission unit transmits attribute information of a user requesting entry into the private land area or information regarding an moving object entering to the private land area, together with the entry request, and
   the reception unit receives the private map information according to the attribute information of the user or the information regarding the moving object entering the private land area.
(18) An information processing method executed by a computer, comprising:
   receiving private map information including a private land area; and
   generating connection map information in which the private map information and public road map information are connected to each other, based on a reference point, the public road map information including information regarding a public road, and the reference point indicating a common position between the received private map information and the public road map information.
(19) An information processing program for causing a computer to function as:
   a reception unit that receives private map information including a private land area; and
   a generation unit that generates connection map information in which the private map information and public road map information are connected to each other, based on a reference point, the public road map information including information regarding a public road, and the reference point indicating a common position between the private map information received by the reception unit and the public road map information.

### Reference Signs List

- 1, 2, 3: INFORMATION PROCESSING SYSTEM
- 100, 100A, 100B: INFORMATION PROCESSING DEVICE
- 110: COMMUNICATION UNIT
- 120: STORAGE UNIT
- 121: VEHICLE INFORMATION STORAGE UNIT
- 122: PUBLIC ROAD MAP STORAGE UNIT
- 123: PRIVATE MAP STORAGE UNIT
- 124: CONNECTION MAP STORAGE UNIT
- 130: CONTROL UNIT
- 131: ACCEPTANCE UNIT
- 132: TRANSMISSION UNIT
- 133: RECEPTION UNIT
- 134: GENERATION UNIT
- 135: ROUTE SEARCH UNIT
- 136: DISPLAY UNIT
- 200, 200A, 200B: FACILITY DEVICE

## Claims

1. An information processing device comprising:
a reception unit that receives private map information including a private land area; and
a generation unit that generates connection map information in which the private map information and public road map information are connected to each other, based on a reference point, the public road map information including information regarding a public road, and the reference point indicating a common position between the private map information received by the reception unit and the public road map information.

2. The information processing device according to claim 1, wherein
the reception unit receives the private map information including information regarding a route for entering the private land area or exiting from the private land area or a traffic rule in the private land area, and
the generation unit generates the connection map information in which the information regarding the route for entering the private land area or exiting from the private land area or the traffic rule in the private land area is reflected.

3. The information processing device according to claim 2, wherein
the generation unit generates the connection map information to which a traffic rule included in the private map information is preferentially applied, in a case where a traffic rule included in the public road map information and the traffic rule included in the private map information are different from each other in a predetermined area.

4. The information processing device according to claim 1, further comprising
a route search unit that searches for a route for entering the private land area or exiting from the private land area, based on the connection map information generated by the generation unit.

5. The information processing device according to claim 4, wherein
the route search unit controls movement of a moving object based on the searched route.

6. The information processing device according to claim 1, wherein
the reception unit receives the private map information including information indicating an area where a moving object is parkable in the private land area, and
the generation unit generates the connection map information including the information indicating the area where the moving object is parkable in the private land area.

7. The information processing device according to claim 1, wherein
the reception unit receives a format of the private map information or information indicating whether or not the private map information has received predetermined authentication, and
the generation unit generates the connection map information based on the format of the private map information or the information indicating whether or not the private map information has received the predetermined authentication.

8. The information processing device according to claim 1, wherein
the reception unit receives the private map information conforming to a format of the public road map information, and
the generation unit generates the connection map information by changing scale information and azimuth information of the private map information so as to be matched to those of the public road map information.

9. The information processing device according to claim 8, wherein
the reception unit receives the private map information including information indicating a positional relationship with the public road, and
the generation unit specifies the reference point based on the information indicating the positional relationship with the public road and generates the connection map information based on the specified reference point.

10. The information processing device according to claim 8, wherein
the reception unit receives the private map information including position information indicating a position of a reference point in the private map information, and
the generation unit generates the connection map information by superimposing the reference points with a position in the public road map information indicated by the position information and the reference point in the private map information as the reference points.

11. The information processing device according to claim 8, wherein
the reception unit receives the private map information including information indicating a boundary between the private land area and the public road, and
the generation unit generates the connection map information based on a comparison between the information indicating the boundary, included in the private map information and information indicating a boundary with the private land area in the public road map information.

12. The information processing device according to claim 8, wherein
the reception unit receives private map information including position information indicating a position of a reference point which is a point registered in advance in the private map information, and
the generation unit specifies a position in the public road map information indicated by the position information of the reference point, and generates the connection map information by superimposing the reference points with the specified position in the public road map information and the reference point as the reference points.

13. The information processing device according to claim 1, wherein
the reception unit receives the private map information including scale information and azimuth information of the private map information and a first point and a second point specified by a positional relationship with the public road, and
the generation unit matches the scale information and the azimuth information of the private map information to those of the public road map information, connects the private map information and the public road map information to each other with the first point and a first corresponding point corresponding to the first point in the public road map information as the reference points, and generates the connection map information in a case where a discrepancy in position between the second point and a second corresponding point corresponding to the second point in the public road map information when the private map information and the public road map information have been connected to each other is within a predetermined threshold value.

14. The information processing device according to claim 1, wherein
the reception unit receives the private map information including scale information and azimuth information of the private map information and a first point and a second point registered in advance, and
the generation unit matches the scale information and the azimuth information of the private map information to those of the public road map information, specifies a first corresponding point corresponding to the first point in the public road map information based on position information of the first point, connects the private map information and the public road map information to each other with the first point and the first corresponding point as the reference points, and generates the connection map information in a case where a discrepancy in position between the second point and a second corresponding point corresponding to the second point in the public road map information when the private map information and the public road map information have been connected to each other is within a predetermined threshold value.

15. The information processing device according to claim 14, wherein
the generation unit specifies the first corresponding point based on three-dimensional position information indicating the first point.

16. The information processing device according to claim 1, further comprising
a transmission unit that transmits an entry request into the private land area, wherein
the reception unit receives the private map information from a predetermined device that has responded to the entry request.

17. The information processing device according to claim 16, wherein
the transmission unit transmits attribute information of a user requesting entry into the private land area or information regarding an moving object entering to the private land area, together with the entry request, and
the reception unit receives the private map information according to the attribute information of the user or the information regarding the moving object entering the private land area.

18. An information processing method executed by a computer, comprising:
receiving private map information including a private land area; and
generating connection map information in which the private map information and public road map information are connected to each other, based on a reference point, the public road map information including information regarding a public road, and the reference point indicating a common position between the received private map information and the public road map information.

19. An information processing program for causing a computer to function as:
a reception unit that receives private map information including a private land area; and
a generation unit that generates connection map information in which the private map information and public road map information are connected to each other, based on a reference point, the public road map information including information regarding a public road, and the reference point indicating a common position between the private map information received by the reception unit and the public road map information.
